(19) **Europäisches Patentamt**
**European Patent Office**
**Office européen des brevets**

(11) **EP 1 773 601 B1**

(12) **EUROPEAN PATENT SPECIFICATION**

(45) Date of publication and mention
of the grant of the patent:
**10.11.2010 Bulletin 2010/45**

(51) Int Cl.:
***B41M 5/26*** *(2006.01)* ***G11B 7/24*** *(2006.01)*

(21) Application number: **05762069.2**

(86) International application number:
**PCT/JP2005/013437**

(22) Date of filing: **14.07.2005**

(87) International publication number:
**WO 2006/009234 (26.01.2006 Gazette 2006/04)**

(54) **OPTICAL RECORDING MEDIUM**

OPTISCHES AUFZEICHNUNGSMEDIUM

SUPPORT D'ENREGISTREMENT OPTIQUE

(84) Designated Contracting States:
**DE ES FR GB IT NL**

(30) Priority: **16.07.2004 JP 2004210553**
**16.07.2004 JP 2004210343**
**17.12.2004 JP 2004366839**
**14.03.2005 JP 2005071254**

(43) Date of publication of application:
**18.04.2007 Bulletin 2007/16**

(73) Proprietor: **Ricoh Company, Ltd.**
**Tokyo 143-8555 (JP)**

(72) Inventors:
• **YUZURIHARA, Hajime**
**2500865 (JP)**
• **HANAOKA, Katsunari**
**Atsugi-shi,**
**Kanagawa 2430003 (JP)**

• **SHIBATA, Kiyoto**
**Isehara-shi,**
**Kanagawa 2591145 (JP)**
• **KANEKO, Yujiro**
**1940044 (JP)**
• **IWASA, Hiroyuki,**
**Reciente Chigasaki 408**
**Yokohama-shi,**
**Kanagawa 2240000 (JP)**

(74) Representative: **Barz, Peter**
**Patentanwalt**
**Kaiserplatz 2**
**80803 München (DE)**

(56) References cited:
| | |
|---|---|
| **EP-A- 1 343 154** | **EP-A2- 1 132 904** |
| **EP-A2- 1 187 119** | **EP-A2- 1 260 973** |
| **JP-A- 2003 211 849** | **JP-A- 2003 331 467** |
| **JP-A- 2004 005 767** | **JP-A- 2004 022 007** |
| **JP-A- 2004 178 779** | **JP-A- 2005 153 338** |
| **US-A1- 2002 168 587** | **US-A1- 2003 003 395** |

EP 1 773 601 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a phase-change optical recording medium.

Background Art

Optical recording media that have been put into practical use include a so-called phase-change optical recording medium which utilizes a reversible phase change between a crystalline phase and an amorphous phase. The recording materials of the phase-change optical recording media include AgInSbTe and AgInSbTeGe materials in which Ag, In, Ge, and the like are added to a matrix made from Sb and Te. These materials are used for CD-RW, DVD-RW, DVD+RW media. Each of these phase-change optical recording media has a laminar structure in which a first protective layer, a recording layer, a second protective layer, and a refractive layer are disposed in a laminar structure as basic layers on a plastic substrate with a spiral or concentric groove formed thereon and performs recording and reproducing of binary information. To respond to further high-density and high-capacity of recording, 20GB or more of recording capacity is enabled on a single side of a disk by changing a laser beam wavelength of 650nm to 660nm used for DVD to a laser diode (LD) having a wavelength of 405nm in the blue-violet region, or by using a lens having a large numerical aperture (NA) of 0.85.

On the other hand, to allow information to be recorded and reproduced with DVD, it is possible to consider a method that a numerical aperture for recording and reproducing is set to be 0.65, which is conventionally used. However, since the recording capacity of DVD having a lens numerical aperture of 0.65 is smaller than that of DVD having a lens numerical aperture of 0.85, the applicant of the present invention has already presented a method for recording multivalue information by differences in population of crystalline portions in the vicinity of a recorded mark in an amorphous state to achieve a recording capacity of 20GB or more in Non-Patent Literature 1, Patent Literature 1, and Patent Literature 2.

Hereafter, the technique disclosed in Non-Patent Literature 1 will be described below.

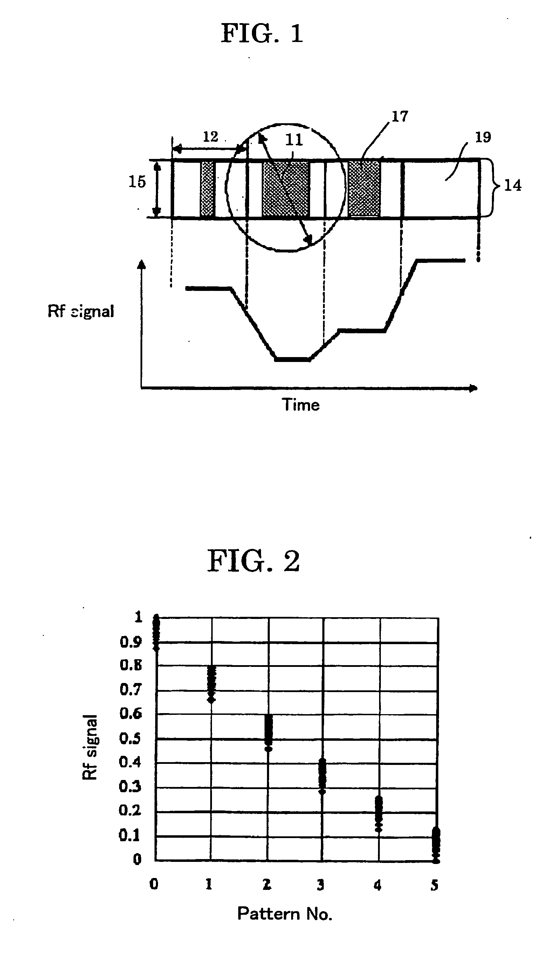

FIG. 1 is a schematic diagram showing the relation between population of recorded marks and a radio-frequency (Rf) signal. Recorded marks are positioned in the substantially center of each cell. A relation similar to the above is shown in a phase pit in which a recorded mark is recorded as in a phase state of a rewritable phase-change material or in a state of concave-convex or irregularities on a substrate. In the case of a phase pit in which a recorded mark is recorded as concave-convex or irregularities on a substrate, the optical depth of a groove in the phase pit needs to be set to $\lambda/4$ so that the signal gain of a Rf signal is maximized. The symbol $\lambda$ indicates a wavelength of recording/reproducing laser. A Rf signal value is given with a value in the case where a focused laser beam for recording and reproducing is positioned at the center of a cell and varies according to the population size of the recorded marks which are populated in one cell. A Rf signal value generally is maximized when no recorded mark resides in a cell, and minimized when the population of recorded marks is in the maximum.

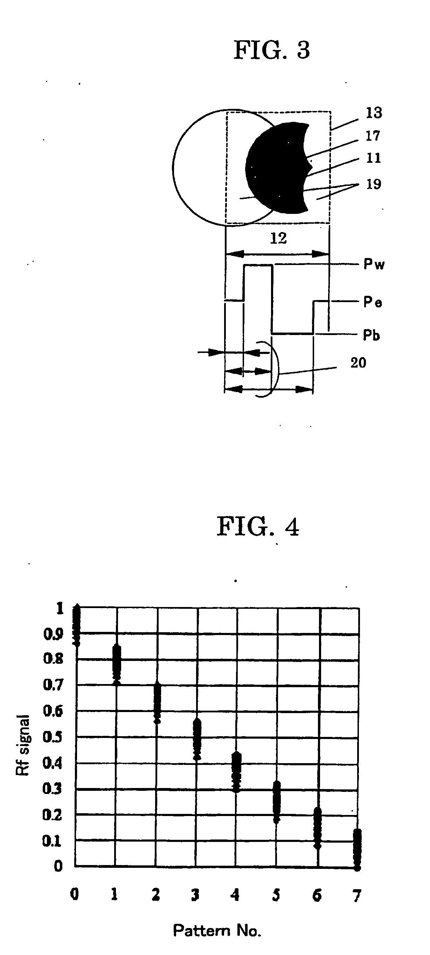

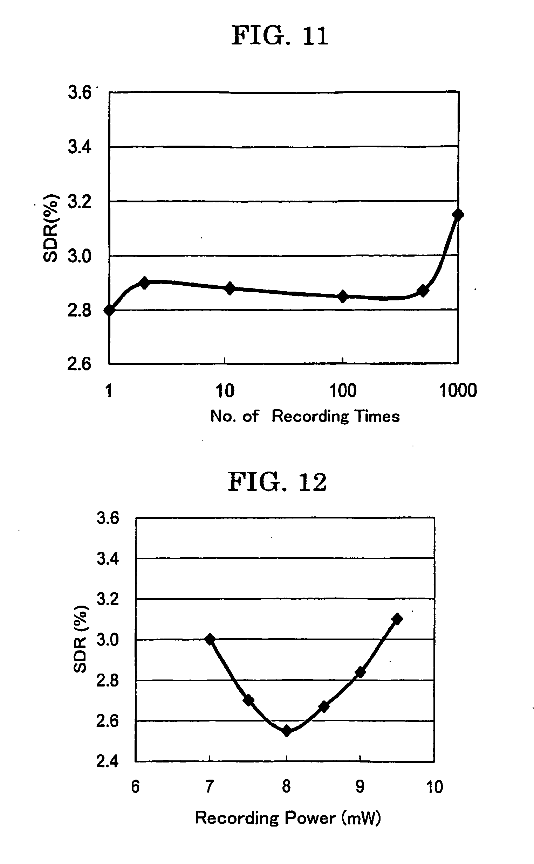

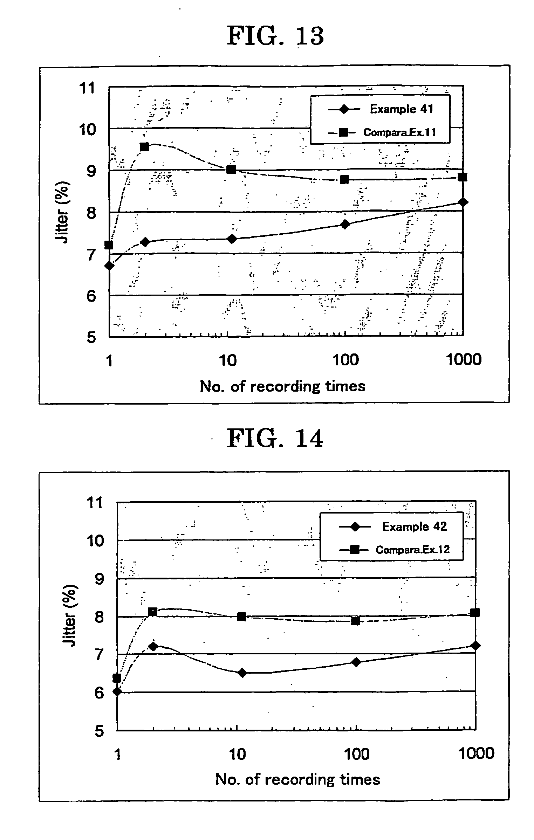

When multivalue recording is performed with, for example, the number of recorded mark patterns or the number of multivalue levels, being 6 in accordance with the above-noted area modulation method, resultant Rf signal values from individual recorded marks show a distribution as illustrated in FIG. 2. These Rf signal values are respectively represented by a normalized value obtained by defining the width between the maximum Rf signal value and the minimum Rf signal value i.e. dynamic range or DR as 1. Recording and reproducing were performed by setting a circumferential length of each cell, which is hereinafter referred to as cell length and represented with 12 in FIG. 1 to approx. $0.6\mu m$ using an optical system having $\lambda$ = 650nm, a lens numerical aperture (NA) = 0.65, and a focused beam diameter = approx. $0.8\mu m$ which is represented with 11 in FIG. 1. In FIG. 1, 14 represents a groove, 15 represents a recording track width, 17 represents a crystallized amorphous record mark at low reflectance, and 19 represents a non-recorded portion at high reflectance. Such a multivalue recording mark can be formed by modulating a laser power, such as, recording power Pw, erasing power Pe, bottom power Pb, and the start time as a parameter in a recording strategy as illustrated in FIG. 3. In FIG. 3, 11 represents a beam diameter for reproducing, 12 represents a cell length, 13 represents a cell, 17 represents a multivalue recording mark, 19 represents a crystallized portion, and 20 represents pulse start time.

In the multivalue recording method described above, with increasing in the recording linear density, the cell length is gradually shorter relative to the diameter of the focused laser beam, and when a target cell is reproduced, the focused laser beam runs over the cell to neighbor cells. Therefore, a Rf signal value reproduced from the target cell is influenced depending on the combinations of mark populations of neighbor cells even if the neighbor cells have a same mark population as that of the target cell. Accordingly, inter-signal interference occurs between the target recorded mark and the marks in the neighbor cells. Due to the influence, as shown in FIG. 2, a Rf signal value in individual patterns respectively has a distribution with deviation. Thus, to determine to which a recorded mark pattern the target cell is applied to, an interval between Rf signal values reproduced from individual recorded marks need to keep further away from each other than the interval of the deviation. As shown in FIG. 2, the interval of the respective Rf signal values of recorded marks in each pattern numbers are substantially equivalent to the deviation, and such a state shows a limit in which determination of recorded mark patterns can be marginally carried out.

A technique proposed to break through the limit is the multivalue-detection technique using consecutive three-data cells, which is disclosed in Non-Patent Literature 1. The technique comprises learning a multivalue signal distribution which includes patterns of combination of consecutive three-data cells, for example when recorded with 8 values, $8^3$ = 512 patterns, to create a pattern table for the pattern, and calculating a pattern of consecutive three marks based on the result of reproduced signals of unknown data and then referencing the pattern table to determine the unknown signals to be reproduced with multivalue. The technique makes it possible to reduce error rate in determining multivalue signals even with a conventional cell density or a SDR value where inter-signal interference occurs when signal information is reproduced. The SDR value is represented by a ratio; $\Sigma\sigma i/(n \times DR)$; the average value of standard deviation of respective multivalue signals "$\sigma i$" when the number of multivalue tones is defined as "n", and the dynamic range "DR" of multivalue Rf signals, and represents quality of signals corresponding to a jitter in binary recording. Generally, when the number of multivalue tones "n" is set to a certain value, the smaller the standard deviation of multivalue signals "$\sigma i$" is, the greater the dynamic range "DR" is, and the smaller SDR value is. As a result, the error rate is reduced because of its improved detecting performance of multivalue signals. On the contrary, with increases in the number of multivalue tones, SDR value and the error rate respectively are greater.

When the multivalue detection technique is used, multivalue detection is enabled, for example, with eight values, as illustrated in FIG. 4, where the number of multivalue tones is increased to eight, and distributions of respective Rf signal values overlap each other.

The above-noted phase-change recording materials can also be used in the multivalue recording method. However, high-speed recording and reproducing will be required in rewritable or recordable-once media such as DVD-R/RW, DVD+R/R, in rewritable phase-change media capable of recording and reproducing by using blue laser diode or Blu-ray standard, and in multivalue phase-change media. To achieve the requirement, it is necessary to challenge achieving of a balance between speeding-up of crystallization rate and long-term storage stability of recorded marks. There is a limit to AgInSbTe materials with a eutectic composition of $Sb_{70}Te_{30}$ is used therein as a matrix, which have been used so far. In actuality, in recording at a linear velocity of 8X or more, it is impossible to use DVD because of a problem with its long-term storage stability of recorded mark. Therefore, achievement of a balance between speeding-up of crystallization rate and long-term storage stability of recorded marks with the use of other Sb-containing materials is sought, not using materials which contains Sb and Te as a matrix. Preferred materials thereof are GaSb, and GeSb. For example, Patent Literature 3 discloses materials in which In is added to GeSb and also discloses that Sn, Bi, Zn, Ga, or the like in an amount of 10 atomic% or less is preferably added to GeSb as additional elements. Preferred materials thereof are GaSb and GeSb. Besides, examples of the preferred materials include GeSbSnIn disclosed in Patent Literature 4, GeMnSb disclosed in Patent Literature 5, Te, In and Ga to be added to GeSbSn disclosed in Patent Literature 6, yet the above-noted materials are not those capable of resolving the challenges presented in the present invention.

Patent Literature 1 Japanese Patent Application Laid-Open (JP-A) No. 2003-218700
Patent Literature 2 Japanese Patent Application Laid-Open (JP-A) No. 2004-152416
Patent Literature 3 Japanese Patent Application Laid-Open (JP-A) No. 2001-39301
Patent Literature 4 Japanese Patent Application Laid-Open (JP-A) No. 2002-11958
Patent Literature 5 Japanese Patent Application Laid-Open (JP-A) No. 2004-341240
Patent Literature 6 Japanese Patent Application Laid-Open (JP-A) No. 2004-203011

The patent literature documents JP 2004/005767 and JP 2003/211849 disclose optical recording media wherein the recording layer has the base composition GeSbTeMn or GeGaSbTeMn. There is no indication in those two documents for the substitution of Te by Sn in the composition of the phase-change recording layer, as a matter of fact, the composition with Te is an essential feature of the prior art inventions because, in the mentioned documents, the recording layer is base on the Sb-Te eutectic composition.

Non-Patent Literature 1 Data Detection using Pattern Recognition, International Symposium on Optical Memory 2001, Technical Digest 2001, Pd-27

Disclosure of Invention

With increasing demands for high-speed and high-capacity of recording, a phase-change recording material which is capable of high-speed recording, efficiently controlling an arbitrarily determined length of a recorded mark and is excellent in long-term storage stability will be required. In particular, with increases in capacity of recording, high-speed recording and reproducing will be much more requested. Recording, keeping a mark length of around 0.1μm in a state of amorphous phase, and efficiently controlling of the mark in the vicinity of 0.1μm is fundamental to binary recording and multivalue recording. In particular, in multivalue recording, the difference between the shortest mark and the longest mark is small, and mark length must be minutely controlled therebetween.

In addition, in multivalue recording, since the area of a mark is changed in a groove in which information is recorded, and reflected signal voltage reproduced from the changed mark area is divided at regular intervals to thereby read information, the number of errors of reproduced signals will be increased not to allow the information to be read when involved with not only loss of recorded marks and changes in mark length under high temperature and humidity conditions but also variations in reflectance due to changes in crystalline conditions between recorded marks. Further, for binary recording and multivalue recording, it is also required to use a material which can have a great difference in optical constants between an amorphous phase and a crystalline phase in both the region at a wavelength of 650nm and the blue-violet region at a wavelength of 405nm. Particularly, in multivalue recording, the higher the reflectance at zero level where no information is recorded is, the greater the difference in reflected signal voltage between the signal levels is, and the greater the difference between the maximum level, for example, a signal of the eighth value, and zero level signal so-called modulation factor is, the better, because information is read at the reflected signal level.

It is therefore the object of the present invention is to provide a phase-change optical recording medium which comprises phase-change optical recording materials and a suitable structure satisfying the requirements.

A first aspect of the present invention is an optical recording medium which comprises a substrate, a first protective layer, a phase-change recording layer, a second protective layer, and a reflective layer, wherein the phase-change recording layer is a layer which utilizes optical constants associated with a reversible phase change induced by laser beam irradiation between an amorphous phase and a crystalline phase and comprises Ge, Sb, Sn, Mn, and X, wherein X represents at least one element selected from In, Bi, Te, Ag, Al, Zn, Co, Ni, and Cu, wherein when the relation of the respective contents of Ge, Sb, Sn, Mn, and X is represented by $Ge\alpha Sb\beta Sn\gamma Mn\delta X\varepsilon$, elements of $\alpha$, $\beta$, $\gamma$, $\delta$, and $\varepsilon$ respectively satisfy the following numerical expressions: $5 \leq \alpha \leq 25$, $45 \leq \beta \leq 75$, $10 \leq \gamma \leq 30$, $0.5 \leq 8 \leq 20$, and $0 \leq \varepsilon \leq 15$, wherein $\alpha$, $\beta$, $\gamma$, $\delta$, and $\varepsilon$ respectively represent atomic% when $\alpha + \beta+\gamma+\delta+\varepsilon= 100$, and wherein the sum total of contents of Ge, Sb, Sn, Mn and X is at least 95 atomic% of the entire amount of the phase-change recording layer.

A second aspect of the present invention is an optical recording medium according to the first aspect, wherein the content of the element of $\alpha$ satisfies the following numerical expression: $10 \leq \alpha \leq 25$.

A third aspect of the present invention is an optical recording medium according to any one of the aspects of the first aspect or the second aspect, wherein the content of the element of $\beta$ satisfies the following numerical expression: $50 \leq \beta \leq 70$.

A fourth aspect of the present invention is an optical recording medium according to any one of the aspects of the first aspect to the third aspect, wherein the content of the element of $\delta$ satisfies the following numerical expression: $1.0 \leq \delta$.

A fifth aspect of the present invention is an optical recording medium according to any one of the aspects of the first aspect to the fourth aspect, wherein the phase-change recording layer further comprises Ga in an amount of 5 atomic% or less.

A sixth aspect of the present invention is an optical recording medium according to any one of the aspects of the first aspect to the fifth aspect, wherein the phase-change recording layer further comprises any elements selected from Tb, Dy, Nd, Gd, Ti, Zr, Cr, Fe, and Si.

A seventh aspect of the present invention is an optical recording medium according to any one of the aspects of the first aspect to the sixth aspect, wherein the first protective layer, the phase-change recording layer, the second protective layer, and the reflective layer are disposed on the substrate in this order in a laminar structure, or the reflective layer, the second protective layer, the phase-change recording layer, the first protective layer are disposed on the substrate in this order in a laminar structure.

An eighth aspect of the present invention is an optical recording medium according to the seventh aspect, wherein the optical recording medium further comprises a binder layer and a cover substrate, and the reflective layer, the second protective layer, the phase-change recording layer, the first protective layer, the binder layer and the cover substrate are disposed on the substrate in a laminar structure.

A ninth aspect of the present invention is an optical recording medium according to any one of the aspects of the seventh aspect or the eighth aspect, wherein the reflective layer comprises any one of Ag and an Ag alloy.

A tenth aspect of the present invention is an optical recording medium according to the seventh aspect, wherein the second protective layer comprises a mixture of ZnS and $SiO_2$.

An eleventh aspect of the present invention is an optical recording medium according to the seventh aspect, wherein the reflective layer, the second protective layer, the phase-change recording layer, and the first protective layer are disposed on the substrate in this order in a laminar structure, the second protective layer comprises any one of mixtures selected from a mixture of $ZrO_2$, $Y_2O_3$, and $TiO_2$, a mixture of $SiO_2$, $Nb_2O_5$, and a mixture of $SiO_2$ and $Ta_2O_5$.

A twelfth aspect of the present invention is an optical recording medium according to the tenth aspect, wherein the optical recording layer further comprises an anti-sulfuration layer between the reflective layer and the second protective layer.

A thirteenth aspect of the present invention is an optical recording medium according to the seventh aspect, wherein the first protective layer comprises a mixture of ZnS and $SiO_2$.

A fourteenth aspect of the present invention is an optical recording medium according to any one of the aspects of the seventh aspect to the thirteenth aspect, wherein the optical recording medium further comprises an interface layer between the first protective layer and the phase-change recording layer, wherein the interface layer has a thickness of 1nm to 10nm and comprises any one of a mixture of $ZrO_2$, $Y_2O_3$ and $TiO_2$, a mixture of $SiO_2$ and $Nb_2O_5$, and a mixture of $SiO_2$ and $Ta_2O_5$.

A fifteenth aspect of the present invention is an optical recording medium according to any one of the aspects of the seventh aspect to the fourteenth aspect, wherein the optical recording medium further comprises an interface layer between the phase-change recording layer and the second protective layer.

A sixteenth aspect of the present invention is an optical recording medium according to any one of the aspects of the first aspect to the fifteenth aspect, wherein the first protective layer comprises ZnS and $SiO_2$ and has a composition ratio of $ZnS:SiO_2$ being 60 mol% to 85 mol%:40 mol% to 15 mol%, and the second protective layer comprises ZnS and $SiO_2$ and has a composition ratio of $ZnS:SiO_2$ being 30 mol% to 85 mol%:70 mol% to 15 mol%.

Brief Description of Drawings

FIG. 1 is a schematic diagram showing the relation between recorded mark population and Rf signal.

FIG. 2 is a diagram showing a distribution of Rf signal values from the respective recorded mark patterns when multivalue recording is performed using the number of recorded mark patterns, i.e. the number of multivalue levels = 6 in accordance with the area modulation method disclosed in Non-Patent Literature 1.

FIG. 3 is a diagram showing a recording strategy for performing the multivalue recording in FIG. 2.

FIG. 4 is a diagram showing an example that respective distributions of each of Rf signal values have overlapped each other by increasing the number of multivalue tones to 8.

FIG. 5 is a diagram showing an example of a laminar structure of an optical recording medium according to the present invention.

FIG. 6 is a diagram showing another example of a laminar structure of an optical recording medium according to the present invention.

FIG. 7 is a diagram showing still another example of a laminar structure of an optical recording medium according to the present invention.

FIG. 8 is a diagram showing a laser beam irradiation pulse waveform.

FIG. 9 is a diagram showing recording power dependency of SDR and dynamic range (DR) of an optical recording medium according to Example 2 of the present invention.

FIG. 10 is a diagram showing repetitive reproducing properties of an optical recording medium according to Example 2.

FIG. 11 is a diagram showing SDR after data is overwritten in an optical recording medium according to Example 36.

FIG. 12 is a diagram showing recording power dependency of SDR of an optical recording medium according to Example 37.

FIG. 13 is a diagram showing relations between the number of recording times and resulting jitter values of the optical recording media according to Example 41 and Comparative Example 11.

FIG. 14 is a diagram showing relations between the number of recording times and resulting jitter values of the optical recording media according to Example 42 and Comparative Example 12.

Best Mode for Carrying Out the Invention

Hereafter, the present invention will be described in detail.

An optical recording medium according to the present invention allows binary recording and multivalue recording, and in the multivalue recording, the multivalue recording method disclosed in Non-Patent Literature 1 can be used.

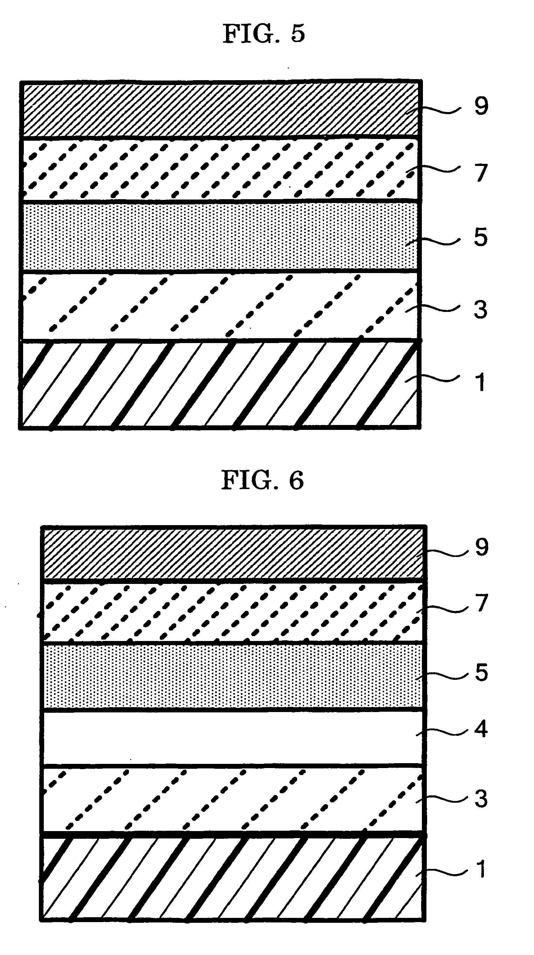

Examples of a structure of an optical recording medium according to the present invention include, as shown in FIG. 5, a structure in which a first protective layer 3, a phase-change recording layer 5 which utilizes optical constants associated with a reversible phase-change induced by laser beam irradiation between an amorphous phase and a crystalline phase, a second protective layer 7, and a reflective layer 9 are disposed on a transparent substrate 1 in this order.

The transparent substrate is preferably transparent to at least a laser beam having a wavelength ranging from 400nm to 800nm and has small birefringence and a narrow distribution. In the process of forming the substrate, the substrate may have a distribution of birefringence with respect to every radius position of the substrate. The birefringence of the material is preferable to be narrower, and the formed substrate is also preferable to have a narrow distribution of birefringence. It is preferable to use a glass substrate for the reason of no presence of birefringence, however, a substrate made from polycarbonate is often used because polycarbonate is cheaper than glass.

Generally, the substrate has a guide groove having a groove depth of 20nm to 35nm, a groove width of $0.2\mu m$ to $0.3\mu m$, and a groove pitch of $0.40\mu m$ to $0.50\mu m$.

Examples of the first protective layer include oxides, nitrides, carbides, and a mixture thereof. A material having a higher transmittance in the vicinity of a wavelength of 400nm are suitable. Carbides having a high-light absorbance, such as SiC, are not suitable however can be combined with a protective layer made from oxides, and nitrides, and the like so as to be formed in a thin layer of several nanometers for use as a layer for serving to give light absorbance. Among them, it is preferably a mixture of ZnS and $SiO_2$ ($ZnSSiO_2$), and the composition ratio of $ZnS:SiO_2$ is preferably 30 mol% to 90 mol%: 70 mol% to 10 mol%, and more preferably 60 mol% to 85 mol%: 40 mol% to 15 mol%. When the above-noted materials are used for the first protective layer, crystallization of a layer itself can be restricted under repeatedly written and high temperature conditions and it is possible to keep high-recording sensitivity and reduce transformations of the layer when being repeatedly written.

In a first protective layer formed, the oxygen ratio of each constituent oxide is not limited to the stoichiometric compositions, and the oxygen ratio allows for deficit in oxygen. For example, the oxygen ratio for SiOx is $0 < x \leq 2$. The same applies to the second protective layer, the interface layer and the like which will be described below.

A first protective layer 3 may be structured to be made in two or more layers. When recorded repeatedly, with increases in the number of recording times, elements constituting a protective layer between a recording layer 5 and the first protective layer 3 are likely to diffuse to the recording layer. Thus, an interface layer 4 may be formed between the first protective layer 3 and the recording layer 5, as shown in FIG. 6. Further, an interface layer may be provided between the recording layer 5 and the second protective layer 7 (not shown).

Another structure is that a layer made from oxides other than $ZnSSiO_2$, nitrides, or a mixture thereof are used on a substrate, and a $ZnSSiO_2$ layer and a recording layer are disposed in a laminar structure on the substrate in this order. This structure aims for heat dissipation of a laser beam when repeatedly recorded, namely, it aims to dissipate heat to the peripheral portions of the groove before heat reaches the substrate. When an interface layer is disposed, a function of a crystallization-acceleration-assisting layer for improving erasing properties may be given to the interface layer depending on the materials for the recording layer for the purposes except for improving repetitive recording properties. In this case, the interface layer is in a crystalline state or in a multicrystal form and serves to assist nucleus formation/growth of the recording layer. Examples of the interface layer include oxides, carbides, and nitrides. To prevent the interface layer from impairing its long-term storage stability or archival storage stability under high temperature and humidity conditions, the interface layer preferably has a thickness of several nanometers.

In the present invention, an interface layer is mainly used for the purpose of preventing repetitive recording properties from degrading and is used when the thickness of $ZnSSiO_2$ layer is in the range of 30nm to 100nm, using, particularly, a blueviolet laser. By disposing an interface layer between the first protective layer 3 and the recording layer 5, it makes it possible to prevent deterioration of the first protective layer caused by raised temperature at the time of recording and decreases in reflectance caused by a reduced refractive index and to prevent degradation of recording properties.

It is preferred that materials for the interface layer be transparent and have a refractive index of approx. 2.3 which is equivalent to that of $ZnSSiO_2$ for light at a wavelength of 405nm. Examples of the raw materials include $SiO_2$, $Al_2O_3$, $ZrO_2$, MgO, ZnO, $Nb_2O_5$, $Ta_2O_5$, $Y_2O_3$, $TiO_2$, AlN, and SiN. It is preferably a mixture of $ZrO_2$ and $TiO_2$ having high melting point and a refractive index of approx. 2.3, a mixture in which $Y_2O_3$ further added to the above mixture, a mixture of $SiO_2$ and $Nb_2O_5$, a mixture of $SiO_2$ and $Ta_2O_5$. When the materials are used as target materials in forming an interface layer by sputtering, it is possible to prevent the target materials being broken even with the use of a target having a large area, by mixing 3 atomic% to 8 atomic% of $Y_2O_3$ with $ZrO_2$. The proportion (mol%) of respective oxides in the mixture of $ZrO_2$, $Y_2O_3$, and $TiO_2$ is preferably $2 \leq x \leq 8$ and $10 \leq y \leq 70$ when it is defined as $[(ZrO_2) 1-x (Y_2O_3)x] 1-y (TiO_2)y$. A mixture of $In_2O_3$ and ZnO and a mixture of $In_2O_3$ and MgO are also preferable in terms of light transmission and heat dissipation.

The thickness of the interface layer is preferably 1nm to 10nm. It is hard to form a layer having a thickness of 1nm or less, and when the thickness is more than 10nm, thermal conductivity is higher and heat is likely to diffuse to the periphery, which causes low recording sensitivity and degraded recording properties. Further, when an interface layer having a thickness of 10nm or more is left under high temperature conditions, a recorded mark may be smaller due to crystalline nucleus formation/growth and may disappear depending on the material.

It is also preferred to use the same material for the second protective layer as used in the first protective layer; $ZnSSiO_2$. However, the composition ratio of $ZnS:SiO_2$ is preferred to be 30 mol% to 85 mol%:70 mol% to 15 mol%, because recording sensitivity of the second protective layer having a thermal conductivity lower than that of the first protective layer will be improved. For example, the first protective layer is preferred to have a composition ratio of $ZnS:SiO_2 = 70:30$, and the second protective layer is preferred to have a composition ratio of $ZnS:SiO_2 = 80:20$.

Herein, the first protective layer is a protective layer disposed on the laser beam irradiation side, and a protective layer disposed near to the reflective layer is referred to as the second protective layer.

For the reflective layer, Al, Ag, Cu, Pd, Nd, Ni, Ti, Au, Bi, In, and an alloy thereof are used. To perform recording at high linear velocity, materials that have high thermal conductivity are suitably used. Among them, Ag is preferable, and an alloy containing Ag in an amount of 95 atomic% or more is preferable. When an Ag alloy is used, the Ag alloy is preferably mixed with a material having a thermal conductivity which is close to that of Ag. At least one element selected from Nd, Cu, Bi, and In is preferably used in an amount added to Ag of 2 atomic% or less and more preferably in an amount added to Ag of 1 atomic% or less. When a short laser beam wavelength is used, it is preferable that an Ag alloy be used because concave-convex on a surface of a reflective layer causes decreases in the number of reflected signals and causes noise of signals.

When $ZnSSiO_2$ is used for the second protective layer and a reflective layer made from Ag or an Ag alloy is disposed on the second protective layer, a layer made from oxide(s), nitride(s), carbide(s) needs to be formed as an anti-sulfuration layer between the second protective layer and the reflective layer, because a compound of Ag and S is likely to be formed under high temperature conditions and recording properties degrade. For the anti-sulfuration layer, SiOC, SiC, ZnO, MgO, $TiO_2$, a mixture of $TiO_2$ and TiC, a mixture of $ZrO_2$ and ZrC, a mixture of $Ta_2O_5$ and TaC, and a mixture of $Nb_2O_5$ and $SiO_2$ are suitable. Or, the above-noted materials for the interface layer may be used as they are. The first protective layer preferably has a thickness of 40nm to 250nm, the second protective layer preferably has a thickness of 5nm to 20nm, the anti-sulfuration layer preferably has a thickness of 1nm to 5nm, and the reflective layer preferably has a thickness of 100nm to 180nm.

A phase-change recording layer of the optical recording medium according to the present invention comprises Ge, Sb, Sn, Mn, and X, in which X represents at least one element selected from In, Bi, Te, Ag, Al, Zn, Co, Ni, and Cu), and when the relation of respective contents of Ge, Sb, Sn, Mn and X is represented by $Ge\alpha Sb\beta Sn\gamma Mn\delta X\varepsilon$, in which respective elements of $\alpha$, $\beta$, $\gamma$, $\delta$ and $\varepsilon$ individually represents atomic% when $\alpha + \beta + \gamma + \delta + \varepsilon = 100$, the elements of $\alpha$, $\beta$, $\gamma$, $\delta$ and $\varepsilon$ respectively satisfy the following numerical expressions: $5 \leq \alpha \leq 25$, $45 \leq \beta \leq 75$, $10 \leq \gamma \leq 30$, $0.5 \leq \delta \leq 20$, and $0 \leq \varepsilon \leq 15$. The total content of Ge, Sb, Sn, Mn, and X is at least 95 atomic% of the entire content of the phase-change recording layer.

Conventionally, materials for recording layers comprise Sb and Te. Examples of the materials to which Ge, Ag, In, Ga, Sn, Zn, and rare earth elements are added based on a eutectic composition being close to Sb:Te = 70:30 (atomic%) include Ag-In-Sb-Te, Ge-In-Sb-Te, Ge-Sb-Te, Ge-Ag-In-Sb-Te, Ge-Sn-Sb-Te, Ge-Zn-Sb-Te, Ga-Ge-Sb-Te, and Ga-Se-Te. These materials respectively have a composition of $60 \leq Sb \leq 80$ (atomic%) and $10 \leq Te \leq 30$ (atomic%) in an amount as additional elements of 5 atomic% to 15 atomic %.

When recording is performed at low linear velocity, satisfactory properties can be obtained with these materials, however, when recording is performed at higher linear velocity, storage stability under high temperature conditions degrade even if the initial recording properties are excellent. This phenomenon appears in DVD when recording is performed at a linear velocity higher than 14m/s. This does not only apply to DVD but also apply to recording media in which a blue laser is used.

On the other hand, multivalue recording is a method for recording and reproducing of information using tones of reflectance and requires that the difference between the lowest level of reflected signal and the highest level reflectance, namely, the dynamic range be great. Since the dynamic range of the above-noted materials which comprise Sb and Te in a spectrum of blue wavelengths is smaller than in a spectrum of red wavelengths when multivalue recording is performed using a blue laser, a material which makes the value of dynamic range greater is required. Accordingly, improvements in dynamic range and storage reliability are required. To make dynamic range greater, basically, the greater the difference in optical constant or refractive index between a crystalline phase and an amorphous phase in a recording material, the better it is. As a suitable recording material, there are GaSb, GeSb, InSb, SnSb, ZnSb and the like in which Sb is used as base.

The optical constants include a refractive index "n" and an absorption coefficient "k". When "n" and "k" in a crystalline state are respectively defined as "nc" and "kc" and "n" and "k" in a state of amorphous phase are defined as "na" and "ka", the optical constants in the vicinity of wavelength of 650nm in the case of Ga:Sb = 14:86 are nc = 3.41, kc = 4.67, na = 4.36, and ka = 2,81, respectively. The optical constants in the vicinity of wavelength of 405nm are nc = 1.38, kc = 3.28, na = 2.63, and ka = 3.12, respectively. Thus, the value of $\Delta n = (na - nc)$ in the vicinity of wavelength of 650nm is 0.95, the value of $\Delta n = (na - nc)$ in the vicinity of wavelength of 405nm is 1.25, and the difference between "ka" and "kc" is small; 0.16.

When Ge:Sb = 50:50, in the vicinity of wavelength of 650nm, nc = 3.48, kc = 4.53, na = 4.31, and ka = 2.61, and in the vicinity of wavelength of 405nm, nc = 1.37, kc = 3.29, na = 2.53, and ka = 2.98. The value of $\Delta n$ in the vicinity of wavelength of 650nm is 0.83, and in the vicinity of wavelength of 405nm, the value of $\Delta n$ is 1.16.

Thus, when the recording linear velocity is up to approx. 35m/s at the maximum, GaSb and GeSb are suitable materials. The composition of Sb, Ga, and Ge is preferably in the range of $50 \leq Sb \leq 95$ (atomic%), $Ga \leq 5$ (atomic%) or $Ge \leq 50$ (atomic%).

When the amount of Sb is more than 80 atomic%, it is hard to uniformly crystallize the entire medium in the process that the recording layer is subjected to a phase-change to a crystalline phase after the initialization step is performed, namely, after forming the medium, the phase is uneven, and it is impossible to use the layer in multivalue recording, particularly. Storage reliability under high temperature conditions is impaired, and the end portions of a once-written recorded mark are crystallized and degraded.

GaSb materials have a eutectic composition at a ratio of Ga:Sb = 12:88. A recording layer having the composition is sandwiched in between the first protective layer and the second protective layer, and a reflective layer made from an Ag alloy is disposed on the second protective layer to yield a recording medium. When a laser beam at a wavelength of 660nm is irradiated to the disk surface at a power of 15mW after the phase of the recording layer is changed to a crystalline phase, the recording layer begins to partially form an amorphous phase from a linear velocity nearly at 15m/s.

When the amount of Ga is further increased to the recording layer, the linear velocity at which it begins to form an amorphous phase dramatically drops, which makes the initialization more difficult. As a result, with the use of only two elements of Ga and Sb, it is impossible to obtain recording properties enough to perform recording at up to 10m/s which is a low recording linear velocity.

While Ge and Sb have a eutectic composition at a ratio of Ge:Sb = 16:84. The recording linear velocity at which an amorphous phase begins to form is 20m/s. With the use of only two elements of Ge and Sb, however, it is also impossible to obtain recording properties enough to perform recording at a speed up to 10m/s.

Then a material as a third additional element capable of being easily initialized, allowing adjustments of recording linear velocity from low level to high level and having high-optical constants both in crystalline and amorphous phases was examined.

Specifically, the case that Sn is added to Ge:Sb = 16:84 (atomic%) and Ga:Sb= 12:88 (atomic%) was examined.

$(Ge_{16}Sb_{84})$ 100 - xSnx and $(Ga_{12}Sb_{88})$ 100 - ySny were defined, and "x" and "y" were changed. When both "x" and "y" are respectively changed to 0, 5, 10, 15, 20, and 25 (atomic%), in GeSnSb materials, the recording linear velocity at which an amorphous phase began to form was only approx. 2m/s. higher with the use of Sn in an amount up to 15 atomic%, however, with Sn in an amount 20 atomic% or more, it became 5m/s faster. While, in GaSnSb materials, the recording linear velocity at which an amorphous phase began to form was 10m/s higher or more by adding just 5 atomic% of Sn to GaSb.

Further, the recording medium was retained under high temperature conditions (80°C, 85%RH (Relative Humidity)) for 200 hours to examine changes in reflectance in a non-recorded portion after crystallization. The result shows that reflectance decreased with increases in the loadings of Sn and particularly, reflectance of GaSnSb materials decreased remarkably. When 20 atomic% Sn was added to GaSnSb, approx. 5% reduction in reflectance occurred. For GeSnSb material, the decrease in reflectance was 2% or less.

In multivalue recording, since information is distinguished by the scale of reflectance, variations in reflectance lead to degradation of recording properties, and changes in reflectance are preferable to be small. However, when GeSnSb materials are used as they are, preferred recording properties cannot be obtained unless 25 atomic % or more Ge is included when recorded at low-speed linear velocity, although it is suitably used in the case of recording at a high linear velocity of 10m/s or more. On the other hand, when Sn is added, difference in optical constants between a crystalline phase and an amorphous phase is greater, and this is preferable because the dynamic range is greater in binary recording and multivalue recording.

Then, based on the above finding, as a result of examination of a method for enabling recording at high linear velocity as well as responding to a wider range of recording linear velocities, the inventors of the present invention found that the problem can be solved by adding Mn to GeSnSb as materials for a recording layer and adjusting the ratio of the composition, and the optical recording medium has an advantage in overwrite properties when recording is performed at high linear velocity and reliabilities. The term high linear velocity represents a range of linear velocity of 10m/s or more.

Specifically, the inventors found that a material represented by $5 \leq \alpha \leq 25$, $45 \leq \beta \leq 75$, $10 \leq \gamma \leq 30$, and $0.5 \leq \delta \leq 20$ (atomic%) is preferable when the composition formula is defined as $Ge\alpha Sb\beta Sn\gamma Mn\delta$. Such a material enables a greater difference in optical constants. Even when Mn is added, the reflectance results in the same or higher than that when not added. The higher the amount of Ge, the later the crystallization rate is. Therefore, in the case of recording at lower linear velocities, a highly reliable optical recording medium can be obtained at lower speeds by increasing the amount of Ge.

On the other hand, an optical recording medium responding to recording at high linear velocity can be obtained by decreasing the amount of Ge and increasing the amounts of Sb and Sn. Sb has a higher effect on increasing the crystallization rate than Sn. An optical recording medium responding to recording at high linear velocity can be obtained by decreasing the amount of Ge and increasing the amount of Sn, however, it results in degraded reliabilities and has a limitation to recording at high linear velocity. Among reliabilities, it is known that Shelf properties degrade with decreasing the amount of Ge and increasing the amount of Sn. Shelf properties are properties for evaluating recording of a recording medium left in high temperature conditions. An optical recording medium in such a condition is not suitable for recording at high linear velocity. Accordingly, by adding Mn of the fourth element having a faster crystallization rate than Sn, the material for the recording layer having excellent repetitive recording properties at higher recording speeds and ensuring reliabilities can be obtained. The decrease in reflectance thereof under high temperature and humidity is 1% or less.

When the content of Ge is more than 25 atomic% and the number of repeatedly overwritten times being 1,000 times or more, recording properties degrade, although data storage stability is improved. In addition, the recording linear velocity at which suitable recording properties can be obtained is slower, and this is not suited to recording at high linear velocity. While Ge is added in an amount less than 5 atomic%, data storage reliability degrades, although it is suited to recording at high linear velocity. The amount of Ge to be added is preferably 10 atomic% or more.

When less than 45 atomic% Sb is added, it is not suited to high-speed recording, and when more than 75 atomic% Sb is added, it degrades data storage stability. The added amount of Sb is preferably 50 atomic% to 70 atomic%.

When less than 10 atomic% Sn is added, it is not suited to recording at high linear velocity, reflectance in a crystalline state decreases, and the difference in optical constants between a crystalline phase and an amorphous phase is smaller, which causes an decrease in the SN ratio of reproduced signals. When more than 30 atomic% Sn is added, the melting point and crystallization temperature of recording materials is lowered to cause degradation of storage reliability.

When more than 20 atomic% of Mn is added, it is not suited to recording at high linear velocity, and recording sensitivity becomes degraded. The addition amount of Mn is preferably 5 atomic% or less. When Mn is used in recording at high linear velocity at a linear velocity more than 20m/s, effect of the loadings is not clearly exerted with an added amount Mn less than 0.5 atomic%, and the added amount is preferably 0.5 atomic% or more. Effect of an addition of Mn ranging from 0.5 atomic% to 1 atomic% is clearly exerted at a linear velocity of near 30m/s, and in the case of DVD, the effect is clearly exerted at 28m/s or more, which corresponds to 8X. Even when Mn changes in atomic weight, the amount of change in the crystallization rate is small relative to the change in the atomic weight and has a composition margin. Zn has a wide large amount of change in crystallization rate relating to a change of 1 atomic% and has a narrow margin. The same applies to Bi.

Optical recording media are mostly produced by magnetron sputtering, however, when the material comprises Mn, the target used for the device has a high density ratio, i.e. a ratio of density between the theoretical value calculated from the sonstituent material and the actual value, of 99% or more. This means that a target having a high density ratio excels in discharge stability when forming a layer by sputtering enables producing a fine recording layer and enhancing quality of recording signals and uniformity. When the material does not include Mn, the density ratio is less than 95%. Namely, a material comprising GeSbSn has a density ratio of approx. 94%. When a material comprising Te, not Mn, the density ratio is approx. 89%.

In addition, in order to improve storage reliability and DOW, it is preferred to add at least one element selected from In, Bi, Te, Ag, Al, Zn, Co, Ni, Cu, as an element X. The loadings, $\varepsilon$ (atomic%), is preferably $0 \leq \varepsilon \leq 15$.

The recording layer preferably has a thickness of 10nm to 20nm.

The phase-change recording layer preferably comprises only the materials of Ge, Sb, Sn, Mn, and X however may further comprise other elements. The total content of Ge, Sb, Sn, Mn, and X should be at least 95 atomic% of the entire content of the phase-change recoding layer.

Except for Ge, Sb, Sn, Mn, and X, it is preferred to use Ga as an additional element. It is also preferred that 7 atomic% or less of Ga be added to the materials constituting the composition. With the use of the composition, it is possible to decrease crystallization temperature and to easily obtain conditions suitable for recording in the initialization step in which a recording layer in a state of amorphous phase is changed to a crystalline phase, before performing the producing process of the phase-change recording medium and evaluation of recording and reproducing in the early stage. Besides, at least one element selected from Tb, Dy, Nd, Gd, Ti, Zr, Cr, Fe, and Si may be added.

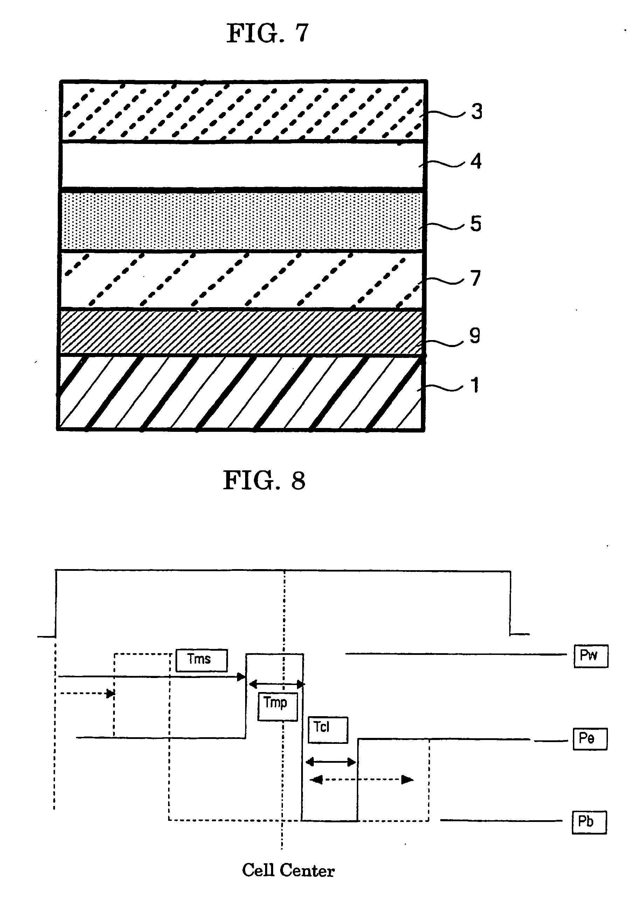

Other structures of a recording medium according to the present invention include a structure in which each of the layers shown in FIGs. 5 and 6 are disposed in reverse order, namely, a reflective layer 9, a second protective layer 7, a recording layer 5, and a fist protective layer 3 are disposed on a substrate 1 having a guide groove provided thereon in a laminar structure in reverse order from the structure of layers shown in FIG. 5, or a structure in which a reflective layer 9, a second protective layer 7, a recording layer 5, and interface layer 4, and a first protective layer 3 are disposed on a substrate in this order in a laminar structure (FIG. 7). When an Ag alloy is used for the reflective layer, an anti-sulfuration layer may be disposed between the second protective layer 7 and the reflective layer 9.

In this case, a mixture of $ZrO_2$ and $TiO_2$, a mixture which further comprises $Y_2O_3$ in addition to the mixture of $ZrO_2$ and $TiO_2$, a mixture of $SiO_2$ and $Nb_2O_5$, and a mixture of $SiO_2$ and $Ta_2O_5$, which are above mentioned as the material of the interface layer, can be used for the second protective layer. Besides, a mixture of $In_2O_3$ and $SnO_2$, a mixture of $In_2O_3$ and ZnO, and a mixture of ZnO and $Al_2O_3$ may be used. A mixture having a higher thermal conductivity than a mixture of $ZnS.SiO_2$ is preferable. In particular, it is effective in the case of an optical recording medium using an optical pickup having an objective lens numerical aperture of 0.85. These mixtures respectively have a higher thermal conductivity compared to $ZnS \cdot SiO_2$, have an effect on speeding up re-crystallization rate and enable improvements in recording mark formation and overwrite properties.

The preferred thickness of the second protective layer is from 3nm to 15nm, and more preferably from 4nm to 10nm.

According to the present invention, it is possible to provide an optical recording medium enabling taking a wider dynamic range and improving multivalue recording properties and storage reliability even with the use of a laser of a wavelength of 405nm.

By using a phase-change recording material having a specific composition, it is also possible to present an optical recording medium enabling recording an arbitrarily determined length of mark in an excellently controlled manner and recording at high linear velocity and having excellent long-term storage stability. Particularly, by adding Ga, recording sensitivity can be improved without impairing high-speed recording properties. Further, by using an oxide for the material of the second protective layer and by providing an interface layer, recording properties can be improved at high-speed recording.

In addition, an optical recording medium having improved repetitive recording properties can be provided by employing an interface layer.

It is also possible to provide an optical recording medium which has improved in recording properties by giving a structure of layers in which each of layers are disposed in reverse order from those of conventional optical recording media.

Further, it is possible to provide an optical recording medium having a large storage capacity in which excellent recording properties can be achieved in binary recording with high-storage reliability.


Example

Hereafter, the present invention will be described in detail referring to specific examples; however, the present invention is not limited to the disclosed examples.


(Examples 1 to 3)

On a low birefringence polycarbonate substrate having a thickness of 0.6mm and a guide groove provided thereon, the guide groove having a groove depth of 21nm, a groove width of 0.30μm, and a groove pitch of 0.45μm (ST3000, manufactured by TEIJIN-Bayer Polytec Ltd.), a first protective layer made from $ZnSSiO_2$ (70:30 mol%) and has a thickness of 41nm, a recording layer made from materials of each compositions shown in the columns of Examples 1 to 3 in Table 1 and has a thickness of 14nm, a second protective layer made from $ZnSSiO_2$ (80:20 mol%) and has a thickness of 6nm, an anti-sulfuration layer made from $Nb_2O_5:SiO_2$ = 80:20 (mol%) and has a thickness of 4nm, and a reflective layer made from $Ag_{99.5}Bi_{0.5}$ (atomic%) and having a thickness of 140nm were disposed in this order by sputtering.

Next, on the reflective layer, a ultraviolet curable resin having a thickness of 7μm (SD318, manufactured by DAINIPPON INK AND CHEMICALS, INC.) was used to form an environmental protection layer by spin-coating, and a cover substrate having a thickness of 0.6mm with no groove formed thereon was further laminated on the environmental protection layer with a ultraviolet curable resin having a thickness of 10μm (DVD003 manufactured by Nippon Kayaku Co., Ltd.) to yield optical recording media according to Examples 1 to 3.

The recording layers of each of these optical recording media were crystallized by using an apparatus for initialization having a large diameter LD, a LD wavelength of 800nm, a beam diameter of 200μm x 1μm, i.e. the radius direction × the track direction. The Constant Linear Velocity (CLV) method was used for crystallization by rotating each of these recording media at a linear velocity of 3.0m/s while moving a feeding point of the apparatus for initialization at a feed rate of 36μm per revolution.

Besides, in order to determine optical constants in each of these recording layers, a sample in which a protective layer made from $ZnSSiO_2$ was formed on upper and lower sides of the recording layer were prepared and initialized by using the apparatus for initialization in the same manner. The optical constants before and after initialization step of the recording layer used in Example 1 were na = 1.09, ka = 3.32, nc =2.36, and kc = 3.19. The value of Δn is 1.27.

Recording and reproducing of these optical recording media were performed using an apparatus of LD, i.e. laser diode having a wavelength of 405nm, a numerical aperture (NA) of an objective lens being 0.65, and a pickup head having a beam diameter of 0.54μm loaded thereon. The recording power (Pw) of laser beam irradiated to the disk surface of the recording media was set to 10mW at maximum, and the erasing power (Pe1, Pe2) was set at 40% to 60% of the recording power. The bottom power (Pb) was set to 0.1mW which was lower than signal reproducing power of 0.6mW.

The basic cell length was determined as 0.24μm, and multivalue recording was performed with eight values in the cell. The recording linear velocity was set to 6m/s. To form recorded marks, recording was performed in the following manner, as shown in FIG. 8, when a short mark, namely, a mark of the "level 1" which is referred to as M1, and similarly, "Level 7" referred to as M7, was recorded, a laser beam irradiation of the recording power was started in Tms delayed from the leading of the basic cell. The area of the mark was controlled by adjusting recording power irradiation time (Tmp) and the subsequent bottom power irradiation time (Tcl). The same recording power irradiation time (Tmp) was used in each level, however, bottom power irradiation time (Tcl) was changed with respect to each level.

Table 2 shows each setting time from M1 to M7. A ratio of Pe/Pw of recording power (Pw) to erasing power (Pe) was set to 0.62. A clock frequency for performing recording was set to 25MHz. Eight values made from marks from M1 to M7 and M0 having no mark were recorded at random. To determine fluctuation of variations in a reflected signal on each level, namely, SDR, data for the portion of 39 sectors in which one sector comprises 1,221 cells, was loaded.

The reproduced signals were filtered to remove large scale variations of reflected signals in an amount of several kHz level or less existing in the circumference of track and to perform AGC processing using the previously recorded sequential data from M0 to M7. The AGC processing is performed to eliminate differences in amplitude variations of the subsequently recorded random signals based on the amplitudes on the levels from M0 to M7 to process them into signals each having a certain level of amplitude.

Thereafter, the signals were passed through a waveform equalizer (EQ) to amplify signals having particularly small amplitudes like marks on the levels of M1 and M2. The signals were retrieved to determine the standard deviation of reflection potential on each level to thereby determine their SDR values.

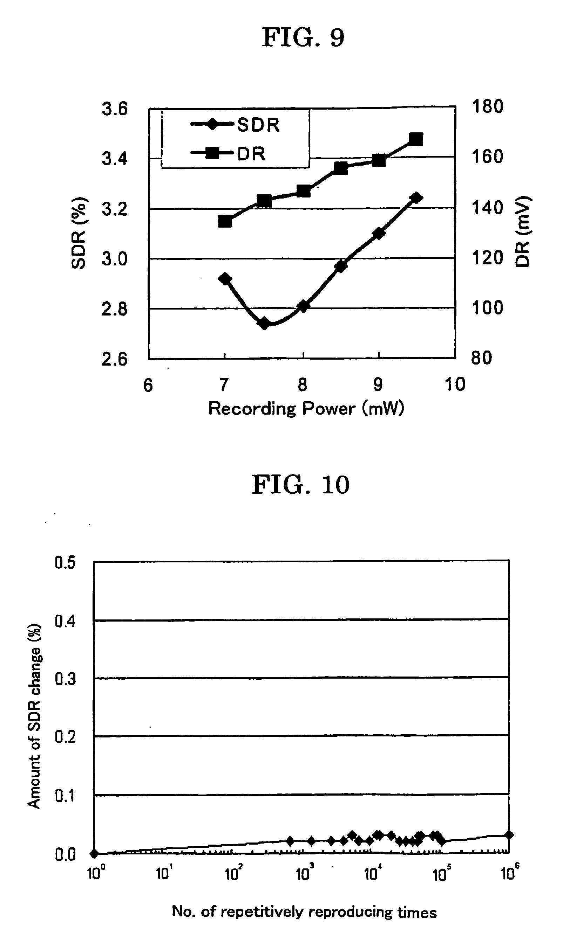

FIG. 9 illustrates resulting SDR values and recording power dependency of dynamic range (DR) in the case where signals in three tracks adjacent to each other are recorded by using a recording layer of an optical recording medium according to Example 2 and recorded signals in the center track of the three tracks are reproduced.

Optical recording media according to Examples 1 to 3 were left under high-temperature conditions at 80°C and 85%RH (Relative Humidity) for 200 hours to examine reflectance in non-recorded portion and reflectance in recorded portion. Both results before testing and after testing showed a change of 1% or less decrease in reflectance. Table 1 shows changes in SDR and dynamic range (DR) in the case where recording is performed at a suitable recording power (Archival), and in the case where recording is performed after storage testing (Shelf), and both cases demonstrates that degradation of recording properties was suppressed to the minimum.

Table 1

|  | Materials used for Recording Layer/ Composition (atomic%) | SDR (%) | SDR (%) DOW1000 | Archival | | Shelf | |
|---|---|---|---|---|---|---|---|
|  |  |  |  | ΔS (%) | ΔDR (%) | ΔS (%) | ΔDR (%) |
| Ex.1 | Ge:Sb:Sn:Mn = 20:53.5: 20:8.5 | 2.80 | 3.10 | 0.15 | -2 | 0.20 | -5 |
| Ex.2 | Ge:Sb:Sn:Mn = 21:52.5: 20:8:5 | 2.74 | 3.05 | 0.10 | -5 | 0.15 | -5 |
| Ex.3 | Ge:Sb:Sn:Mn = 13:53:20: 14 | 2.68 | 3.05 | 0.25 | -5 | 0.30 | -5 |

Table 2

|  | Tms | Tmp | Tcl |
|---|---|---|---|
| **M1** | 14.75 | 5.00 | 3.85 |
| **M2** | 14.00 | 5.00 | 6.60 |
| **M3** | 12.75 | 5.00 | 7.50 |
| **M4** | 10.25 | 5.00 | 9.75 |
| **M5** | 8.50 | 5.00 | 12.60 |
| **M6** | 8.75 | 5.00 | 16.60 |
| **M7** | 3.75 | 5.00 | 22.25 |

FIG. 10 shows the result of examining repetitive recording properties of the optical recording medium in Example 2 in which 0.05% or less of degradation of recording properties was shown even after recorded signals were repetitively reproduced 100,000 times.

Examples 4 to 19 and Comparative Examples 1 to 8

On a low birefringence polycarbonate substrate having a thickness of 1.1mm and a guide groove provided thereon, the guide groove having a groove depth of 22nm, a groove width of 0.20μm, and a groove pitch of 0.32μm (ST3000, manufactured by TEIJIN-Bayer Polytec Ltd.), a reflective layer made from $Ag_{99.5}Bi_{0.5}$ (atomic%) and having a thickness of 140nm, an anti-sulfuration layer made from SiC and having a thickness of 2nm, a second protective layer made from $ZnSSiO_2$ (80:20 mol%) and having a thickness of 10nm, a recording layer made from materials of each compositions shown in the columns of Examples 4 to 19 and Comparative Examples 1 to 8 in Table 3 and having a thickness of 14nm, a first protective layer made from $ZnSSiO_2$ (70:30 mol%) and having a thickness of 40nm were disposed in this order by sputtering. On the first protective layer, a pressure sensitive adhesive sheet having a thickness of 75μm was laminated using an ultraviolet curable resin having a thickness of 25μm to prepare a light transmissive layer having a thickness of 0.1mm to thereby yield an optical recording medium. Then the optical recording medium went through initialization in the same manner as in Example 1.

By using these optical recording media, the relation between the composition of the constituent elements and recording properties were examined.

Recording and reproducing were performed to each of these optical recording media under the conditions of the shortest mark length of 0.149μm, modulation mode (1-7) RLL, a reproducing power of 0.30mW, using a wavelength of 405nm and a pickup head having a numerical aperture of 0.85. The recording linear velocities employed for each of these optical recording media are shown in Table 3. Recording was performed at recording power/erasing power of 5.5mW/3.2mW, 12mW/3mW, and 15mW/2.5mW respectively for linear velocity of 9.8m/s, 29.5m/s, and 39.4m/s. Recording of one track was performed 11 times followed by recording of three tracks in succession, and then the secondary recorded track was reproduced.

In recording at linear velocity of 20m/s or more, the recording was performed after optimizing the laser beam irradiation time of the recording power and the bottom power and by setting the number of combinations between recording power irradiation pulse and bottom power irradiation pulse to a mark length nT (n= 2 to 8) as follows: one for 2T mark and 3T mark, two for 4T mark and 5T mark, three for 6T mark and 7T mark, and four for 8T mark.

Recorded signals were reproduced at 4.9m/s to determine jitter values. Depending on the optical recording medium, after recording, it was further left under high-temperature conditions of 80°C and 85%RH (Relative Humidity) and 200 hours later, it was taken out of the place to evaluate the reproduced results. As the evaluation criteria, for an initial jitter, the jitter value of 8.0% or less was determined as acceptable. For a jitter after the medium being left under high-temperature conditions, an amount of changed jitter value (Δ jitter) of 2% or less from the initial jitter value was determined as acceptable.

The results described in Table 3 shows that α, β, and γ of the phase-change materials, GeαSbβSnγMnδXε, used in the present invention need to respectively satisfy the ranges of composition defined in the present invention, namely, α, β, and γ respectively need to satisfy the following numerical expressions:

$$5 \leq \alpha \leq 25, \ 45 \leq \beta \leq 75, \ \text{and} \ 10 \leq \gamma \leq 30.$$

For the element of δ, it is also found that there is no problem with it when used in an amount of 0.5 atomic% to 20 atomic%.

Examples 20 to 24 and Comparative Example 9

On a polycarbonate substrate having a thickness of 0.6mm and a guide groove provided thereon, the guide groove having a groove depth of 27nm, a groove width of 0.25μm, and a groove pitch of 0.74μm, a first protective layer made from $ZnSSiO_2$ (80:20 mol%) and having a thickness of 58nm, a recording layer made from materials of each compositions shown in the columns of Examples 20 to 24 and Comparative Example 9 in Table 3 and having a thickness of 14nm, a second protective layer made from $ZnSSiO_2$ (80:20 mol%) and having a thickness of 16nm, an anti-sulfuration layer made from $Nb_2O_5$:$SiO_2$ = 80:20 (mol%) and having a thickness of 4nm, and a reflective layer made from Ag and having a thickness of 140nm were disposed in this order by sputtering. On the reflective layer, a ultraviolet curable resin having a thickness of 7μm (SD318, manufactured by DAINIPPON INK AND CHEMICALS, INC.) was used to form an environmental protection layer by spin-coating, and a cover substrate having a thickness of 0.6mm was further laminated on the environmental protection layer with a ultraviolet curable resin having a thickness of 15μm (DVD003, manufactured by Nippon Kayaku Co., Ltd.) to yield optical recording media according to Examples 20 to 24 and Comparative Example 9. Next, the optical recording media were initialized in the same manner as in Example 1.

Recording was performed to each of these optical recording media under the conditions of a recording power of 35mW, an erasing power of 8.3mW, a recording linear velocity of 27.9m/s by optimizing each pulse time of the optical recording media by setting the number of combinations between recording power irradiation pulse and bottom power irradiation pulse to a mark length nT (n= 3 to 14) as follows: one for 3T mark, two for 4T mark and 5T mark, three for 6T mark and 7T mark, four for 8T mark and 9T mark, five for 10T mark and 11T mark, and seven for 14T mark. Recording of one track was performed 11 times followed by recording of five tracks in succession, and then the marks were reproduced at a reproducing power of 0.7mW and a linear velocity of 3.5m/s.

Table 3 shows the measurement results of the initial jitter values. From the results of Examples 20 to 21 and Comparative Example 9, it is found that the jitter value is 9% or less when Mn is used in an amount of 0.5 atomic% or more. The jitter value after recording performed 1,000 times was 9% or less. For Ga, the results of Examples 22 to 24 show that the jitter value is 9% or less when the content of Ga is 7 atomic% or less.

Table 3

| | Element Composition at% | | | | | Recording linear velocity m/s | Initial jitter (%) | Δ Jitter (%) |
|---|---|---|---|---|---|---|---|---|
| | Ge | Sb | Sn | Mn | Ga | | | |
| Compara. Ex. 1 | 3 | 70 | 20 | 7 | 0 | 29.5 | 9.4 | 5 |
| Ex. 4 | 5 | 70 | 20 | 5 | 0 | 29.5 | 7.8 | 2 |
| Ex. 5 | 7 | 70 | 20 | 3 | 0 | 29.5 | 7.0 | 1.7 |
| Ex. 6 | 23 | 50 | 13 | 14 | 0 | 9.8 | 7.0 | - |
| Ex. 7 | 25 | 50 | 13 | 12 | 0 | 9.8 | 7.9 | - |
| Compara. Ex. 2 | 27 | 50 | 13 | 10 | 0 | 9.8 | 10.2 | - |
| Compara. Ex.3 | 23 | 40 | 20 | 17 | 0 | 9.8 | 9.3 | - |
| Ex. 8 | 23 | 45 | 22 | 10 | 0 | 9.8 | 7.8 | - |
| Ex. 9 | 23 | 50 | 20 | 7 | 0 | 9.8 | 6.5 | - |
| Ex. 10 | 5 | 70 | 20 | 5 | 0 | 29.5 | 6.5 | 2 |
| Ex. 11 | 5 | 75 | 15 | 5 | 0 | 29.5 | 8.0 | 2 |
| Compara. Ex. 4 | 5 | 80 | 10 | 5 | 0 | 29.5 | 11.0 | 3 |
| Compara. Ex. 5 | 15 | 70 | 5 | 10 | 0 | 29.5 | 11.5 | - |
| Ex. 12 | 12 | 70 | 10 | 8 | 0 | 29.5 | 7.9 | - |
| Ex. 13 | 9 | 70 | 15 | 6 | 0 | 29.5 | 6.8 | - |
| Ex. 14 | 16 | 50 | 25 | 9 | 0 | 9.8 | 6.2 | - |
| Ex. 15 | 13 | 50 | 30 | 7 | 0 | 9.8 | 8.0 | - |
| Compara. Ex. 6 | 10 | 45 | 35 | 10 | 0 | 9.8 | 14.0 | - |
| Ex. 16 | 25 | 45 | 15 | 15 | 0 | 9.8 | 7.0 | - |
| Ex. 17 | 25 | 45 | 10 | 20 | 0 | 9.8 | 8.0 | - |
| Compara. Ex. 7 | 25 | 45 | 5 | 25 | 0 | 9.8 | 11.8 | - |
| Compara. Ex. 8 | 5 | 75 | 20 | 0 | 0 | 39.4 | 9.5 | - |
| Ex.18 | 5 | 75 | 19 | 1 | 0 | 39.4 | 7.9 | - |
| Ex. 19 | 5 | 75 | 18 | 2 | 0 | 39.4 | 7.3 | - |
| Compara. Ex. 9 | 13 | 70 | 17 | 0 | 0 | 27.9 | 10.0 | - |
| Ex.20 | 12.5 | 70 | 17 | 0.5 | 0 | 27.9 | 8.0 | - |
| Ex. 21 | 12 | 70 | 17 | 1 | 0 | 27.9 | 7.9 | - |
| Ex. 22 | 7 | 70 | 17 | 1 | 5 | 27.9 | 7.8 | - |
| Ex. 23 | 5 | 70 | 17 | 1 | 7 | 27.9 | 8.0 | - |

(continued)

| | Element Composition at% | | | | | Recording linear velocity m/s | Initial jitter (%) | Δ Jitter (%) |
|---|---|---|---|---|---|---|---|---|
| | Ge | Sb | Sn | Mn | Ga | | | |
| Ex. 24 | 5 | 68 | 17 | 1 | 9 | 27.9 | 10.0 | - |

Examples 25 to 36

On a low birefringence polycarbonate substrate having a thickness of 1.1mm and a guide groove provided thereon, the guide groove having a groove depth of 22nm, a groove width of 0.20μm, and a groove pitch of 0.32μm (ST3000, manufactured by TEIJIN-Bayer Polytec Ltd.), a reflective layer made from $Ag_{99.5}Bi_{0.5}$ (atomic%) and having a thickness of 160nm, an anti-sulfuration layer made from SiC and having a thickness of 3nm, a second protective layer made from $ZnSSiO_2$ (80:20 mol%) and having a thickness of 5nm, a recording layer made from materials of each compositions shown in the columns of Examples 25 to 36 in Table 4 and having a thickness of 14nm, and a first protective layer made from $ZnSSiO_2$ (70:30 mol%) and having a thickness of 40nm were disposed in this order by sputtering. On the first protective layer, a pressure sensitive adhesive sheet having a thickness of 75μm was laminated using an ultraviolet curable resin having a thickness of 25μm to prepare a light transmissive layer having a thickness of 0.1mm to thereby yield an optical recording medium. Then the optical recording medium went through initialization in the same manner as in Example 1.

Recording was performed to each of these optical recording media under the conditions of a recording linear velocity of 19.6m/s, clock frequency of 264MHz, the shortest mark length of 0.149μm, modulation mode (1-7) RLL, reproducing power of 0.35mW, recording power (Pw) of 9mW, and erasing power (Pe) of 3mW, using a wavelength of 405nm and a pickup head having a numerical aperture (NA) of 0.85. The recording was performed after optimizing the laser beam irradiation time of the recording power and the bottom power and by setting the number of combinations between recording power irradiation pulse and bottom power irradiation pulse to a mark length nT (n= 2 to 8) as follows: one for 2T mark and 3T mark, two for 4T mark and 5T mark, three for 6T mark and 7T mark, and four for 8T mark. Recording of each track was performed 11 times followed by recording of three tracks in succession, and then the recorded marks of the second track were reproduced at 4.9m/s to measure the initial jitter with a Limit EQ.

Table 4 shows the results, and any of the resulting initial jitter, values were 8.0% or less.

Table 4

| | Element Composition at% | | | | | | | | | | | | Initial jitter (%) |
|---|---|---|---|---|---|---|---|---|---|---|---|---|---|
| | Ge | Sb | Sn | Mn | In | Bi | Ag | Al | Zn | Co | Ni | Cu | |
| Ex. 25 | 7.5 | 65.5 | 17.0 | 7.0 | 3 | 0 | 0 | 0 | 0 | 0 | 0 | 0 | 6.8 |
| Ex. 26 | 10.0 | 62.5 | 18.0 | 6.5 | 0 | 3 | 0 | 0 | 0 | 0 | 0 | 0 | 7.2 |
| Ex. 27 | 10.0 | 63.0 | 20.0 | 5.0 | 0 | 0 | 2 | 0 | 0 | 0 | 0 | 0 | 6.5 |
| Ex. 28 | 10.0 | 62.0 | 17.0 | 6.0 | 0 | 0 | 0 | 5 | 0 | 0 | 0 | 0 | 7.2 |
| Ex. 29 | 7.5 | 64.5 | 19.5 | 5.5 | 0 | 0 | 0 | 0 | 3 | 0 | 0 | 0 | 7.5 |
| Ex. 30 | 10.0 | 66.0 | 17.0 | 4.0 | 0 | 0 | 0 | 0 | 0 | 3 | 0 | 0 | 7.7 |
| Ex. 31 | 10.0 | 65.5 | 17.0 | 4.5 | 0 | 0 | 0 | 0 | 0 | 0 | 3 | 0 | 7.2 |
| Ex. 32 | 9.0 | 63.0 | 19.5 | 5.5 | 0 | 0 | 0 | 0 | 0 | 0 | 0 | 3 | 7.5 |
| Ex. 33 | 6.5 | 62.5 | 11.0 | 5.0 | 5 | 5 | 5 | 0 | 0 | 0 | 0 | 0 | 8 |
| Ex. 34 | 7.5 | 64.5 | 19.0 | 4.0 | 3 | 0 | 2 | 0 | 0 | 0 | 0 | 0 | 7 |
| Ex. 35 | 8.5 | 64.5 | 19.0 | 4.0 | 2 | 0 | 0 | 0 | 0 | 2 | 0 | 0 | 7.2 |
| Ex. 36 | 10.0 | 62.0 | 19.0 | 5.0 | 1 | 0 | 0 | 0 | 3 | 0 | 0 | 0 | 7.6 |

Example 37

An optical recording medium for Example 37 was prepared in the same manner as in Example 2, provided that an interface layer made from $[(ZrO_2)_{97}(Y_2O_3)_3]_{80}(TiO_2)_{20}$ (mol%) and having a thickness of 3nm was formed between the recording layer and the first protective layer and followed by initialization step in the same manner as in Example 2. Then, using the same recording and reproducing apparatus as used in Example 2, the recorded marks were overwritten recording linear velocity of 6m/s, recording power of 8mW, erasing power of 5mW. The results of measured SDR were shown in FIG. 11.

Example 38

On a low birefringence polycarbonate substrate having a thickness of 0.6mm and a guide groove provided thereon, the guide groove having a groove depth of 21nm, a groove width of 0.30$\mu$m, and a groove pitch of 0.45$\mu$m (ST3000, manufactured by TEIJIN-Bayer Polytec Ltd.), a reflective layer made from $Ag_{99.5}Bi_{0.5}$ (atomic%) having a thickness of 140nm, an anti-sulfuration layer made from $Nb_2O_5:SiO_2$ (80:20 mol%) and having a thickness of 3nm, a second protective layer made from $ZnSSiO_2$ (80:20 mol%) and having a thickness of 12nm, a recording layer made from the same materials as used in Example 2 and having a thickness of 14nm, and an interface layer made from $Nb_2O_5$: $SiO_2$ = 80:20 (mol%) and having a thickness of 3nm, and a first protective layer made from $ZnSSiO_2$ (70:30 mol%) were disposed in this order by sputtering. On the first protective layer, the same substrate without a groove or a cover substrate having a thickness of 0.6mm was laminated with a ultraviolet curable resin having a thickness of 15$\mu$m (DVD003, manufactured by Nippon Kayaku Co., Ltd.) to yield an optical recording medium. Next, optical recording medium was initialized to perform multivalue recording at recording linear velocity of 6m/s, as in Example 1, and SDR was evaluated. FIG. 12 shows the recording power dependency of the SDR.

Example 39

On a low birefringence polycarbonate substrate having a thickness of 1.1mm and a guide groove provided thereon, the guide groove having a groove depth of 22nm, a groove width of 0.20$\mu$m, and a groove pitch of 0.32$\mu$m (ST3000, manufactured by TEIJIN-Bayer Polytec Ltd.), a reflective layer made from $Ag_{99.5}Bi_{0.5}$ (atomic%) having a thickness of 140nm, an anti-sulfuration layer made from SiC and having a thickness of 2nm, a second protective layer made from $ZnSSiO_2$ (80:20 mol%) and having a thickness of 10nm, a recording layer made from the same materials as used in Example 1 and having a thickness of 14nm, and a first protective layer made from $ZnSSiO_2$ (70:30 mol%) and having a thickness of 40nm were disposed in this order by sputtering. On the first protective layer, a pressure sensitive adhesive sheet having a thickness of 75$\mu$m was laminated using an ultraviolet curable resin having a thickness of 25$\mu$m to prepare a light transmissive layer having a thickness of 0.1mm to thereby yield an optical recording medium. Then the optical recording medium went through initialization in the same manner as in Example 1.

Recording was performed to the optical recording medium under the conditions of recording liner velocity of 4.9m/s, clock frequency of 66MHz, the shortest mark length 0.149$\mu$m, modulation mode (1-7) RLL, reproducing power of 0.35mW, recording power (Pw) of 4.5mW, and erasing power (Pe) of 3.2mW, using a wavelength of 405nm and a pickup head having a numerical aperture (NA) of 0.85. The recording was performed after optimizing the laser beam irradiation time of the recording power and the bottom power and by setting the number of combinations between recording power irradiation pulse and bottom power irradiation pulse to a mark length nT (n= 2 to 8) as (n - 1).

Recorded signal was reproduced, and the resulting jitter value was measured using a Limit EQ as an equalization method, and the secondary recorded track after recording three tracks in succession had a jitter value of 4.5%, a degree of modulation of 0.60, and a reflectance of 17%. The jitter value after the recorded mark being overwritten 1,000 times increased by 5.0°/.

Example 40

On a low birefringence polycarbonate substrate having a thickness of 1.1mm and a guide groove provided thereon, the guide groove having a groove depth of 22nm, a groove width of 0.20$\mu$m, and a groove pitch of 0.32$\mu$m (ST3000, manufactured by TEIJIN-Bayer Polytec Ltd.), a reflective layer made from $Ag_{99.5}Bi_{0.5}$ (atomic%) having a thickness of 140nm, an anti-sulfuration layer made from SiC and having a thickness of 2nm, a second protective layer made from $ZnSSiO_2$ (80:20 mol%) and having a thickness of 10nm, a recording layer having a composition of Ge:Sb: Sn:Mn:Te = 8:63:22:5:2 and a thickness of 14nm, and a first protective layer made from $ZnSSiO_2$ (70:30 mol%) and having a thickness of 40nm were disposed in this order by sputtering. On the first protective layer, a pressure sensitive adhesive sheet having a thickness of 75$\mu$m was laminated using an ultraviolet curable resin having a thickness of 25$\mu$m to prepare a light transmissive layer having a thickness of 0.1mm to thereby yield an optical recording medium. Then the optical recording medium went through initialization in the same manner as in Example 1.

Recording was performed once to the optical recording medium under the conditions of recording liner velocity of 19.6m/s, clock frequency of 264MHz, the shortest mark length 0.149$\mu$m, modulation mode (1-7) RLL, reproducing power of 0.35mW, recording power (Pw) of 9mW, and erasing power (Pe) of 5mW, using a wavelength of 405nm and a pickup head having a numerical aperture (NA) of 0.85. The recording was performed after optimizing the laser beam irradiation time of the recording power and the bottom power and by setting the number of combinations between recording power irradiation pulse and bottom power irradiation pulse to a mark length nT (n= 2 to 8) as (n - 1).

Signals were reproduced at 4.9m/s and the jitter values were measured using a Limit EQ. The secondary recorded track among from recorded three tracks in succession showed a jitter value of 6.0%, a degree of modulation of 0.61, and a reflectance of 20%. The jitter value after the recorded mark overwritten 1,000 times increased by 1.5%.

Example 41

On a low birefringence polycarbonate substrate having a thickness of 1.1mm and a guide groove provided thereon, the guide groove having a groove depth of 22nm, a groove width of 0.20$\mu$m, and a groove pitch of 0.32$\mu$m (ST3000, manufactured by TEIJIN-Bayer Polytec Ltd.), a reflective layer made from $Ag_{99.5}Bi_{0.5}$ (atomic%) having a thickness of 140nm, an anti-sulfuration layer using a target of TiO:TiC = 50:50 (mol%) and having a thickness of 4nm, a second protective layer made from $ZnSSiO_2$ (80:20 mol%) having a thickness of 4nm, a recording layer having a composition of Ge:Sb:Sn:Mn = 11:64.5:18:6.5 (atomic%) and a thickness of 12nm, and a first protective layer made from $ZnSSiO_2$ (80:20 mol%) having a thickness of 33nm were disposed in this order by sputtering. On the first protective layer, a pressure sensitive adhesive sheet having a thickness of 75$\mu$m was laminated using an ultraviolet curable resin having a thickness of 25$\mu$m to prepare a light transmissive layer having a thickness of 0.1mm to thereby yield an optical recording medium. Then the optical recording medium went through initialization in the same manner as in Example 1.

Recording was performed to the optical recording medium under the conditions of recording liner velocity of 19.6m/s, clock frequency of 264MHz, the shortest mark length of 0.149$\mu$m, modulation mode (1-7) RLL, reproducing power of 0.35mW, recording power (Pw) of 9mW, and erasing power (Pe) of 3mW, using a wavelength of 405nm and a pickup head having a numerical aperture (NA) of 0.85.

The recording was performed after optimizing the recording power and the bottom power during the laser beam irradiation time and by setting the number of combinations between recording power irradiation pulse and bottom power irradiation pulse to a mark length nT (n= 2 to 8) as 1 for 2T and 3T marks, 2 for 4T and 5T marks, 3 for 6T and 7T marks, and 4 for 8T mark. Signals were recorded in each of three tracks 11 times, and the recorded signals in the secondary recorded track of the three tracks recorded in succession were reproduced at 4.9m/s and the jitter value was measured using a Limit EQ. The dependency on the number of recording times of the jitter, i.e. direct overwrite properties when recording is performed at a recording power of 10.5mW, erasing power of 3.3mW was examined. FIG. 13 shows the results.

Comparative Example 11

An optical recording medium was prepared in the same manner as Example 41, provided that the composition of the recording layer was changed to Ge:Sb:Sn = 14.5:65.5:20 (atomic%).

Recording and reproducing were performed to the optical recording medium in the same manner as Example 41, provided that the recording was performed at a recording power of 9.0mW and an erasing power of 3.0mW. FIG. 13 shows the results.

Example 42

On a low birefringence polycarbonate substrate having a thickness of 1.1mm and a guide groove provided thereon, the guide groove having a groove depth of 22nm, a groove width of 0.20$\mu$m, and a groove pitch of 0.32$\mu$m (ST3000, manufactured by TEIJIN-Bayer Polytec Ltd.), a reflective layer made from $Ag_{99.5}Bi_{0.5}$ (atomic%) having a thickness of 140nm, an anti-sulfuration layer using a target of TiO:TiC = 50:50 (mol%/) and having a thickness of 4nm, a second protective layer made from $ZrO_2$:$TiO_2$:$Y_2O_3$ = 77.6:20:2.4 (mol%/) having a thickness of 8nm, a recording layer having a composition of Ge:Sb:Sn:Mn = 11:64.5:18:6.5 (atomic%) and a thickness of 12nm, and a first protective layer made from $ZnSSiO_2$ (80:20 mol%) having a thickness of 33nm were disposed in this order by sputtering. On the first protective layer, a pressure sensitive adhesive sheet having a thickness of 75$\mu$m was laminated using an ultraviolet curable resin having a thickness of 25$\mu$m to prepare a light transmissive layer having a thickness of 0.1mm to thereby yield an optical recording medium. Then the optical recording medium went through initialization in the same manner as in Example 1.

Recording was performed to the optical recording medium under the conditions of recording liner velocity of 19.6m/s, clock frequency of 264MHz, the shortest mark length of 0.149$\mu$m, modulation mode (1-7) RLL, reproducing power of 0.35mW, recording power (Pw) of 9mW, and erasing power (Pe) of 3mW, using a wavelength of 405nm and a pickup head having a numerical aperture (NA) of 0.85.

The recording was performed after optimizing the laser beam irradiation time of the recording power and the bottom power and by setting the number of combinations between recording power irradiation pulse and bottom power irradiation pulse to a mark length nT (n= 2 to 8) as 1 for 2T and 3T marks, 2 for 4T and 5T marks, 3 for 6T and 7T marks, and 4 for 8T mark. Signals were recorded in each of three tracks 11 times, and the recorded signals in the secondary recorded track of the three tracks recorded in succession were reproduced at 4.9m/s and the jitter value was measured using a Limit EQ. The dependency on the number of recording times of the jitter, i.e. direct overwrite properties when recording is performed at a recording power of 10.5mW, erasing power of 3.3mW was examined. FIG. 14 shows the results.

The optical recording medium was left under high temperature and high humidity conditions at 80°C and 85%RH (Relative Humidity) for 200 hours. The resulting reflectance was compared to that before the test. The change in reflectance was 0.5% or less.

Comparative Example 12

An optical recording medium was prepared in the same manner as Example 42, provided that the composition of the recording layer was changed to Ge:Sb:Sn = 14.5:65.5:20 (atomic%).

Recording and reproducing were performed to the optical recording medium in the same manner as Example 42, provided that the recording was performed at a recording power of 9.5mW and an erasing power of 2.6mW. FIG. 14 shows the results.

The results of Examples 41 to 42 and Comparative Examples 11 and 12 show that overwrite properties are improved by adding Mn, and the change in reflectance relative to ambient temperature is small.

Example 43

An optical recording medium was prepared in the same manner as Example 42, provided that the composition of the recording layer was changed to Ge:Sb:Sn:Mn:Ga = 11:64.5:18:3.5:3 (atomic%).

Recording and reproducing were performed to the optical recording medium in the same manner as Example 42, provided that the recording was performed at a recording power of 8.5mW or 1mW lower than in Example 42. Recording sensitivity was enhanced at high-speed recording by adding Ga to materials of the recording layer.

**Claims**

**1.** An optical recording medium comprising:

> a substrate,
> a first protective layer,
> a phase-change recording layer,
> a second protective layer, and
> a reflective layer,
> wherein the phase-change recording layer is a layer which utilizes optical constants associated with a reversible phase change induced by laser beam irradiation between an amorphous phase and a crystalline phase and comprises Ge, Sb, Sn, Mn, and X,
> wherein X represents at least one element selected from In, Bi, Te, Ag, Al, Zn, Co, Ni, and Cu,
> wherein when the relation of the respective contents of Ge, Sb, Sn, Mn, and X is represented by $Ge_{\alpha}Sb_{\beta}Sn_{\gamma}Mn_{\delta}X_{\varepsilon}$, elements of $\alpha$, $\beta$, $\gamma$, $\delta$, and $\varepsilon$ respectively satisfy the following numerical expressions: $5 \leq \alpha \leq 25$, $45 \leq \beta \leq 75$, $10 \leq \gamma \leq 30$, $0.5 \leq \delta \leq 20$, and $0 \leq \varepsilon \leq 15$,
> wherein $\alpha$, $\beta$, $\gamma$, $\delta$, and $\varepsilon$ respectively represent atomic% when $\alpha + \beta + \gamma + \delta + \varepsilon = 100$, and
> wherein the sum total of contents of Ge, Sb, Sn, Mn and X is at least 95 atomic% of the entire amount of the phase-change recording layer.

**2.** The optical recording medium according to claim 1, wherein the content of the element of $\alpha$ satisfies the following numerical expression: $10 \leq \alpha \leq 25$.

**3.** The optical recording medium according to any one of claims 1 to 2, wherein the content of the element of $\beta$ satisfies the following numerical expression: $50 \leq \beta \leq 70$.

**4.** The optical recording medium according to any one of claims 1 to 3, wherein the content of the element of $\delta$ satisfies the following numerical expression: $1.0 \leq \delta$.

5. The optical recording medium according to any one of claims 1 to 4, wherein the phase-change recording layer further comprises Ga.

6. The optical recording medium according to any one of claims 1 to 5, wherein the phase-change recording layer further comprises any elements selected from Tb, Dy, Nd, Gd, Ti, Zr, Cr, Fe, and Si.

7. The optical recording medium according to any one of claims 1 to 6, wherein the first protective layer, the phase-change recording layer, the second protective layer, and the reflective layer are disposed on the substrate in this order in a laminar structure, or the reflective layer, the second protective layer, the phase-change recording layer, the first protective layer are disposed on the substrate in this order in a laminar structure.

8. The optical recording medium according to claim 7, wherein the optical recording medium further comprises a binder layer and a cover substrate, and the reflective layer, the second protective layer, the phase-change recording layer, the first protective layer, the binder layer and the cover substrate are disposed on the substrate in this order in a laminar structure.

9. The optical recording medium according to any one of claims 7 to 8, wherein the reflective layer comprises any one of Ag and an Ag alloy.

10. The optical recording medium according to claim 7, wherein the second protective layer comprises a mixture of ZnS and $SiO_2$.

11. The optical recording medium according to claim 7, wherein the reflective layer, the second protective layer, the phase-change recording layer, and the first protective layer are disposed on the substrate in this order in a laminar structure, the second protective layer comprises any one of mixtures selected from a mixture of $ZrO_2$, $Y_2O_3$, and $TiO_2$, a mixture of $SiO_2$, $Nb_2O_5$, and a mixture of $SiO_2$ and $Ta_2O_5$.

12. The optical recording medium according to claim 10, wherein the optical recording layer further comprises an anti-sulfuration layer between the reflective layer and the second protective layer.

13. The optical recording medium according to claim 7, wherein the first protective layer comprises a mixture of ZnS and $SiO_2$.

14. The optical recording medium according to any one of claims 7 to 13, wherein the optical recording medium further comprises an interface layer between the first protective layer and the phase-change recording layer, wherein the interface layer has a thickness of 1nm to 10nm and comprises any one of a mixture of $ZrO_2$, $Y_2O_3$ and $TiO_2$, a mixture of $SiO_2$ and $Nb_2O_5$, and a mixture of $SiO_2$ and $Ta_2O_5$.

15. The optical recording medium according to any one of claims 7 to 14, wherein the optical recording medium further comprises an interface layer between the phase-change recording layer and the second protective layer.

16. The optical recording medium according to any one of claims 1 to 15, wherein the first protective layer comprises ZnS and $SiO_2$ and has a composition ratio of ZnS:$SiO_2$ being 60 mol% to 85 mol%:40 mol% to 15 mol%, and the second protective layer comprises ZnS and $SiO_2$ and has a composition ratio of ZnS:$SiO_2$ being 30 mol% to 85 mol%:70 mol% to 15 mol%.

**Patentansprüche**

1. Optisches Aufzeichnungsmedium, umfassend:

ein Substrat,
eine erste Schutzschicht,
eine Phasenänderungs-Aufzeichnungsschicht,
eine zweite Schutzschicht und
eine Reflexionsschicht,
wobei die Phasenänderungs-Aufzeichnungsschicht eine Schicht ist, die optische Konstanten nutzt, die mit einer durch Laserbestrahlung induzierten reversiblen Phasenänderung zwischen einer amorphen Phase und einer kristallinen Phase assoziert sind, und Ge, Sb, Sn, Mn und X umfasst,

worin X mindestens ein Element ausgewählt aus In, Bi, Te, Ag, Al, Zn, Co, Ni und Cu darstellt,

worin, wenn die Beziehung der betreffenden Gehalte an Ge, Sb, Sn, Mn und X durch Ge$\alpha$Sb$\beta$Sn$\gamma$Mn$\delta$X$\varepsilon$ dargestellt ist, die Elemente von $\alpha$, $\beta$, $\gamma$, $\delta$ bzw. $\varepsilon$ die folgenden numerischen Ausdrücke erfüllen: $5 \leq \alpha \leq 25$, $45 \leq \beta \leq 75$, $10 \leq \gamma \leq 30$, $0,5 \leq \delta \leq 20$ und $0 \leq \varepsilon \leq 15$,

worin $\alpha$, $\beta$, $\gamma$, $\delta$ bzw. s Atom-% darstellen, wenn $\alpha + \beta + \gamma + \delta + \varepsilon = 100$,

und

worin die Gesamtsumme der Gehalte an Ge, Sb, Sn, Mn und X mindestens 95 Atom-% der gesamten Menge der Phasenänderungs-Aufzeichnungsschicht ist.

2. Optisches Aufzeichnungsmedium nach Anspruch 1, worin der Gehalt des Elements von $\alpha$ den folgenden numerischen Ausdruck erfüllt: $10 \leq \alpha \leq 25$.

3. Optisches Aufzeichnungsmedium nach irgendeinem der Ansprüche 1 bis 2, worin der Gehalt des Elements von $\beta$ den folgenden numerischen Ausdruck erfüllt: $50 \leq \beta \leq 70$.

4. Optisches Aufzeichnungsmedium nach irgendeinem der Ansprüche 1 bis 3, worin der Gehalt des Elements von $\delta$ den folgenden numerischen Ausdruck erfüllt: $1,0 \leq \delta$.

5. Optisches Aufzeichnungsmedium nach irgendeinem der Ansprüche 1 bis 4, worin die Phasenänderungs-Aufzeichnungsschicht ferner Ga umfasst.

6. Optisches Aufzeichnungsmedium nach irgendeinem der Ansprüche 1 bis 5, worin die Phasenänderungs-Aufzeichnungsschicht ferner irgendwelche Elemente ausgewählt aus Tb, Dy, Nd, Gd, Ti, Zr, Cr, Fe und Si umfasst.

7. Optisches Aufzeichnungsmedium nach irgendeinem der Ansprüche 1 bis 6, worin die erste Schutzschicht, die Phasenänderungs-Aufzeichnungsschicht, die zweite Schutzschicht und die Reflexionsschicht auf dem Substrat in dieser Reihenfolge in einer laminaren Struktur angeordnet sind oder die Reflexionsschicht, die zweite Schutzschicht, die Phasenänderungs-Aufzeichnungsschicht, die erste Schutzschicht auf dem Substrat in dieser Reihenfolge in einer laminaren Struktur angeordnet sind.

8. Optisches Aufzeichnungsmedium nach Anspruch 7, worin das optische Aufzeichnungsmedium ferner eine Binderschicht und ein Decksubstrat umfasst und die Reflexionsschicht, die zweite Schutzschicht, die Phasenänderungs-Aufzeichnungsschicht, die erste Schutzschicht, die Binderschicht und das Decksubstrat auf dem Substrat in dieser Reihenfolge in einer laminaren Struktur angeordnet sind.

9. Optisches Aufzeichnungsmedium nach irgendeinem der Ansprüche 7 bis 8, worin die Reflexionsschicht irgendeines von Ag und einer Ag-Legierung umfasst.

10. Optisches Aufzeichnungsmedium nach Anspruch 7, worin die zweite Schutzschicht eine Mischung von ZnS und $SiO_2$ umfasst.

11. Optisches Aufzeichnungsmedium nach Anspruch 7, worin die Reflexionsschicht, die zweite Schutzschicht, die Phasenänderungs-Aufzeichnungsschicht und die erste Schutzschicht auf dem Substrat in dieser Reihenfolge in einer laminaren Struktur angeordnet sind, die zweite Schutzschicht irgendeine Mischung ausgewählt aus einer Mischung von $ZrO_2$, $Y_2O_3$ und $TiO_2$, einer Mischung von $SiO_2$, $Nb_2O_5$ und einer Mischung von $SiO_2$ und $Ta_2O_5$ umfasst.

12. Optisches Aufzeichnungsmedium nach Anspruch 10, worin die optische Aufzeichnungsschicht ferner eine Antischwefelungsschicht zwischen der Reflexionsschicht und der zweite Schutzschicht umfasst.

13. Optisches Aufzeichnungsmedium nach Anspruch 7, worin die erste Schutzschicht eine Mischung von ZnS und $SiO_2$ umfasst.

14. Optisches Aufzeichnungsmedium nach irgendeinem der Ansprüche 7 bis 13, worin das optische Aufzeichnungsmedium ferner eine Grenzflächenschicht zwischen der ersten Schutzschicht und der Phasenänderungs-Aufzeichnungsschicht umfasst, wobei die Grenzflächenschicht eine Dicke von 1 nm bis 10 nm aufweist und irgendeine von einer Mischung von $ZrO_2$, $Y_2O_3$ und $TiO_2$, einer Mischung von $SiO_2$ und $Nb_2O_5$ und einer Mischung von $SiO_2$ und $Ta_2O_5$ umfasst.

**15.** Optisches Aufzeichnungsmedium nach irgendeinem der Ansprüche 7 bis 14, worin das optische Aufzeichnungsmedium ferner eine Grenzflächenschicht zwischen der Phasenänderungs-Aufzeichnungsschicht und der zweiten Schutzschicht umfasst.

**16.** Optisches Aufzeichnungsmedium nach irgendeinem der Ansprüche 1 bis 15, worin die erste Schutzschicht ZnS und SiO$_2$ umfasst und ein Zusammensetzungsverhältnis von ZnS:SiO$_2$ von 60 mol-% bis 85 mol-%:40 mol-% bis 15 mol-% aufweist und die zweite Schutzschicht ZnS und SiO$_2$ umfasst und ein Zusammensetzungsverhältnis von ZnS:SiO$_2$ von 30 mol-% bis 85 mol-%:70 mol-% bis 15 mol-% aufweist.

**Revendications**

**1.** Support d'enregistrement optique comprenant :

   un substrat,
   une première couche protectrice,
   une couche d'enregistrement à modification de phase,
   une seconde couche protectrice, et
   une couche réflectrice,
   dans lequel la couche d'enregistrement à modification de phase est une couche qui utilise des constantes optiques associées à une modification de phase réversible induite par une irradiation de faisceau laser entre une phase amorphe et une phase cristalline et qui comprend Ge, Sb, Sn, Mn et X,
   où X représente au moins un élément choisi parmi In, Bi, Te, Ag, Al, Zn, Co, Ni et Cu,
   où? lorsque la relation des teneurs respectives entre Ge, Sb, Sn, Mn et X est représentée par Ge $\alpha$ Sb $\beta$ Sn $\gamma$ Mn $\delta$ X $\varepsilon$, les éléments d'$\alpha$, $\beta$, $\gamma$, $\delta$ et $\varepsilon$ satisfont respectivement les expressions numériques suivantes: $5 \leq \alpha \leq 25$, $45 \leq \beta \leq 75$, $10 \leq \gamma \leq 30$, $0{,}5 \leq \delta \leq 20$, et $0 \leq \varepsilon \leq 15$,
   où $\alpha$, $\beta$, $\gamma$, $\delta$ et $\varepsilon$ représentent respectivement des % atomiques lorsque $\alpha + \beta + \gamma + \delta + \varepsilon = 100$, et
   où la somme totale des teneurs en Ge, Sb, Sn, Mn et X est d'au moins 95 % atomiques de la quantité totale de la couche d'enregistrement à modification de phase.

**2.** Support d'enregistrement optique selon la revendication 1, dans lequel la teneur de l'élément d'$\alpha$ satisfait l'expression numérique suivante : $10 \leq \alpha \leq 25$.

**3.** Support d'enregistrement optique selon l'une quelconque des revendications 1 à 2, dans lequel la teneur de l'élément de $\beta$ satisfait l'expression numérique suivante : $50 \leq \beta \leq 70$.

**4.** Support d'enregistrement optique selon l'une quelconque des revendications 1 à 3, dans lequel la teneur de l'élément de $\delta$ satisfait l'expression numérique suivante : $1{,}0 \leq \delta$.

**5.** Support d'enregistrement optique selon l'une quelconque des revendications 1 à 4, dans lequel la couche d'enregistrement à modification de phase comprend de plus Ga.

**6.** Support d'enregistrement optique selon l'une quelconque des revendications 1 à 5, dans lequel la couche d'enregistrement à modification de phase comprend de plus des éléments choisis parmi Tb, Dy, Nd, Gd, Ti, Zr, Cr, Fe et Si.

**7.** Support d'enregistrement optique selon l'une quelconque des revendications 1 à 6, dans lequel la première couche protectrice, la couche d'enregistrement à modification de phase, la seconde couche protectrice et la couche réflectrice sont disposées sur le substrat dans cet ordre dans une structure stratifiée, ou la couche réflectrice, la seconde couche protectrice, la couche d'enregistrement à modification de phase, la première couche protectrice sont disposées sur le substrat dans cet ordre dans une structure stratifiée.

**8.** Support d'enregistrement optique selon la revendication 7, dans lequel le support d'enregistrement optique comprend de plus une couche de liant et une couche de couverture, et la couche réflectrice, la seconde couche protectrice, la couche d'enregistrement à modification de phase, la première couche protectrice, la couche de liant et la couche de couverture sont disposées sur le substrat dans cet ordre dans une structure stratifiée.

**9.** Support d'enregistrement optique selon l'une quelconque des revendications 7 à 8, dans lequel la couche réflectrice comprend l'un quelconque parmi Ag et un alliage d'Ag.

**10.** Support d'enregistrement optique selon la revendication 7, dans lequel la seconde couche protectrice comprend un mélange de ZnS et de SiO$_2$.

**11.** Support d'enregistrement optique selon la revendication 7, dans lequel la couche réflectrice, la seconde couche protectrice, la couche d'enregistrement à modification de phase et la première couche protectrice sont disposées sur le substrat dans cet ordre dans une structure stratifiée, la seconde couche protectrice comprend l'un quelconque des mélanges choisis parmi un mélange de ZrO$_2$, Y$_2$O$_3$ et TiO$_2$, un mélange de SiO$_2$, Nb$_2$O$_5$, et un mélange de SiO$_2$ et Ta$_2$O$_5$.

**12.** Support d'enregistrement optique selon la revendication 10, dans lequel la couche d'enregistrement optique comprend de plus une couche anti-sulfuration entre la couche réflectrice et la seconde couche protectrice.

**13.** Support d'enregistrement optique selon la revendication 7, dans lequel la première couche protectrice comprend un mélange de ZnS et de SiO$_2$.

**14.** Support d'enregistrement optique selon l'une quelconque des revendications 7 à 13, dans lequel le support d'enregistrement optique comprend de plus une couche d'interface entre le première couche protectrice et la couche d'enregistrement à modification de phase,
dans lequel la couche d'interface présente une épaisseur de 1 nm à 10 nm et comprend l'un quelconque d'un mélange de ZrO$_2$, Y$_2$O$_3$ et TeO$_2$, d'un mélange de SiO$_2$ et Nb$_2$O$_5$, et d'un mélange de SiO$_2$ et Ta$_2$O$_5$.

**15.** Support d'enregistrement optique selon l'une quelconque des revendications 7 à 14, dans lequel le support d'enregistrement optique comprend de plus une couche d'interface entre la couche d'enregistrement à modification de phase et la seconde couche protectrice.

**16.** Support d'enregistrement optique selon l'une quelconque des revendications 1 à 15, dans lequel la première couche protectrice comprend ZnS et SiO$_2$ et présente un rapport de composition de ZnS:SiO$_2$ de 60 % en moles à 85 % en moles:40 % en moles à 15 % en moles, et la seconde couche protectrice comprend ZnS et SiO$_2$ et présente un rapport de composition de ZnS:SiO$_2$ de 30 % en moles à 85 % en moles:70 % en moles à 15 % en moles.

# FIG. 1

# FIG. 2

## FIG. 3

## FIG. 4

## FIG. 5

9

7

5

3

1

## FIG. 6

9

7

5

4

3

1

# FIG. 7

# FIG. 8

Cell Center

## FIG. 9

## FIG. 10

# FIG. 11

# FIG. 12

# FIG. 13

# FIG. 14

**REFERENCES CITED IN THE DESCRIPTION**

**Patent documents cited in the description**

- JP 2003218700 A
- JP 2004152416 A
- JP 2001039301 A
- JP 2002011958 A
- JP 2004341240 A
- JP 2004203011 A
- JP 2004005767 A
- JP 2003211849 A